# EUROPEAN PATENT SPECIFICATION

(11) **EP 4 578 014 B1**
(45) Date of publication and mention of the grant of the patent: **04.11.2026**
(21) Application number: 23773077.5
(22) Date of filing: 18.08.2023
(51) Int. Cl.: G10L 21/028, G06N 3/0455, G10L 19/008, G06N 3/08

(54) **AUDIO OBJECT SEPARATION AND PROCESSING AUDIO**
AUDIOOBJEKTTRENNUNG UND -VERARBEITUNG
SÉPARATION D'OBJETS AUDIO ET TRAITEMENT AUDIO

(30) Priority: 24.08.2022 WO PCT/CN2022/114613; 10.07.2023 US 202363512830 P; 11.07.2023 US 202363513066 P
(43) Date of publication of application: 02.07.2025
(73) Proprietor: Dolby Laboratories Licensing Corporation, San Francisco, CA 94103 (US)
(72) Inventor: SUN, Jundai, San Francisco, California 94103 (US); SHUANG, Zhiwei, San Francisco, California 94103 (US); MA, Yuanxing, San Francisco, California 94103 (US)
(74) Representative: Dolby International AB Patent Group Europe
(86) International application number: PCT/US2023/072443
(87) International publication number: WO 2024/044502

(56) References cited:
- WO-A1-2015/150066
- WO-A1-2019/229199
- ANDREAS BUGLER ET AL: "A Study of Transfer Learning in Music Source Separation", ARXIV.ORG, CORNELL UNIVERSITY LIBRARY, 201 OLIN LIBRARY CORNELL UNIVERSITY ITHACA, NY 14853, 23 October 2020 (2020-10-23), XP081799204
- PREM SEETHARAMAN ET AL: "Class-conditional embeddings for music source separation", ARXIV.ORG, CORNELL UNIVERSITY LIBRARY, 201 OLIN LIBRARY CORNELL UNIVERSITY ITHACA, NY 14853, 7 November 2018 (2018-11-07), XP080935476
- LUO YI ET AL: "Deep clustering and conventional networks for music separation: Stronger together", 2017 IEEE INTERNATIONAL CONFERENCE ON ACOUSTICS, SPEECH AND SIGNAL PROCESSING (ICASSP), IEEE, 5 March 2017 (2017-03-05), pages 61 - 65, XP033258380, DOI: 10.1109/ICASSP.2017.7952118

## Description

### Cross Reference To Related Applications

This application claims priority to PCT Application No. PCT/CN2022/114613, filed 24 August 2022, US provisional application 63/512,830 and US provisional application 63/513,066, filed 11 July 2023.

### Technical field

The present disclosure relates to methods for audio object separation, a method for training a sparse audio object separation model, methods for processing audio, and a non-transitory computer-readable medium and a system.

### Background

In an audio signal, multiple audio objects are typically present. However, in some instances, only a subset of audio objects from the audio signal are desired. As a mere example, in an audio stream comprising speech as one object, there might often be a number of other objects, such as sound of weather or weather noise, e.g., sound of rain, thunder, wind, or the like, sound of animals, such as bird chirping, dogs barking, or the like. In some instances, not all of these audio objects are desired in the audio signal or it may be desired to process the various audio objects in the audio stream differently.

Audio object separation, i.e., separating objects in an audio signal, is typically used to separate various audio objects in an audio signal and/or to extract certain objects from the audio stream. Some audio object separation methods and systems generally rely on models and may employ a neural network architecture, a machine-learning, a deep-learning architecture, or the like.

The paper by Andreas Bugler et al ("A study of Transfer Learning in Music Source Separation", ARXIV.ORG, CORNELL UNIVERSITY LIBRARY, 201 OLIN LIBRARY CORNELL UNIVERSITY ITHACA, NY 14853, 23 October 2020) investigate the effectiveness of data augmentation during pretraining, the impact on performance as a result of pretraining and downstream datasets having similar content domains, and also explore how much of a model must be retrained on the final target task, once pretrained.

The paper by Prem Seetharaman et al ("Class-conditional embeddings for music source separation", ARXIV.ORG, CORNELL UNIVERSITY LIBRARY, 201 OLIN LIBRARY CORNELL UNIVERSITY ITHACA, NY 14853, 7 November 2018) proposes using a common embedding space for the time-frequency bins of all instruments in a mixture
inspired by deep clustering and deep attractor networks. Additionally, an auxiliary network is used to generate parameters of a Gaussian mixture model (GMM) where the posterior distribution over GMM components in the embedding space can be used to create a mask that separates individual sources from a mixture.

A further reference relating to music separation is the paper by Luo Yi et al ("Deep clustering and conventional networks for music separation: Stronger together", 2017 IEEE INTERNATIONAL CONFERENCE ON ACOUSTICS, SPEECH AND SIGNAL PROCESSING (ICASSP), IEEE, 5 March 2017, pages 61-65, DOI: 10.1109/ICASSP.2017.7952118).

Patent document WO2019229199A1 (2019-12-05) discloses adaptively remixing audio separations based on a machine-learning evaluation of the source separation quality.

### Summary

An object of the present disclosure is to increase robustness and performance for audio object separation, such as deep-learning based audio object separation. The present invention is defined by the appended independent claims.

According to a first aspect of the present disclosure, there is provided a method for separating audio objects in a mixed audio signal. The mixed audio signal comprises a plurality of audio objects. The method comprises: receiving, by a multi-object separation model, the mixed audio signal; separating, by the multi-object separation model, one or more audio objects of the plurality of audio objects of the mixed audio signal; outputting an output signal comprising the one or more separated audio objects. The model comprises a plurality of sub-models, each sub-model of the plurality of sub-models being trained to determine and output a respective one object of the plurality of audio objects.

Each of the sub-models may be trained by using a respective dataset of a plurality of datasets. Each of the plurality of datasets may comprise a respective set of data pairs. Each data pair may comprise a signal with the respective one object and a mixed signal comprising the respective one object and at least one further signal. The plurality of sub-models may comprise a feature extractor. Each of the plurality of sub-models may comprise one or more layers configured to map from a feature extracted signal into a respective one object. Separating the one or more audio objects may comprise receiving, by the feature extractor, the mixed audio signal; outputting, by the feature extractor, a feature signal comprising one or more features from the mixed audio signal; receiving, by the one or more layers of each of the plurality of sub-models, the feature signal. The method may further comprise: adding, by the model, metadata indicating a location of model layers in the model, a layer type of model layers, and/or a pointer to back and/or forward layer of the model; obtaining data indicative of a quality of a separation of a respective one object of the plurality of objects is below a predetermined quality threshold; obtaining a subsequent training dataset comprising a respective set of data pairs, each data pair comprising a signal with the respective object and a mixed signal comprising the respective object and at least one further signal; determine, based on the metadata, one or more layers of the model, which are used to separate the respective one object; training, using the subsequent training dataset, the one or more layers of the model, wherein the training comprises freezing remaining layers of the model so that only the determined one or more layers are trained using the subsequent dataset.

According to a second aspect of the present disclosure, there is provided a computer-implemented method for training a sparse audio object separation model. The method comprises: obtaining a training audio signal, the training audio signal comprising a sparse audio object, a non-sparse audio object, and at least one further audio object; and training the model to separate the combination of the sparse audio object and the non-sparse audio object from the training audio signal.

According to a third aspect of the present disclosure, there is provided a computer-implemented method for separating a sparse audio object from a mixed audio signal. The mixed audio signal comprises at least a sparse audio object, a non-sparse audio object, and at least one further audio object. The method comprises: providing a sparse object separation model and training the sparse audio object separation model according to the second aspect of the present disclosure; generating a first separation signal by separating, by the sparse audio object separation model, the combination of the sparse audio object and the non-sparse audio object from the mixed audio signal; generating a second separation signal by separating, by a non-sparse audio object separation model trained to separate a non-sparse audio object from a mixed audio signal, the non-sparse audio object from the mixed audio signal; generating an output signal by subtracting the second separation signal from the first separation signal.

The sparse audio object separation model of the second and/or third aspect may be a multi-object separation model, such as the multi-object separation model according to the first aspect, or part thereof, such as a sub-model thereof. Alternatively or additionally, the non-sparse audio object separation model may be the multi-object separation model according to the first aspect and/or a portion thereof, such as a sub-model thereof.

The sparse audio object may have a shorter duration than the non-sparse audio object and/or has a narrower frequency range than the non-sparse audio object. The sparse audio object may alternatively or additionally be one or more of an animal sound, such as a bird chirp or dog bark, thunder, and a knocking sound. Alternatively or additionally, The non-sparse audio object may be one or more of speech, wind noise, and rain.

According to a fourth aspect of the present disclosure, there is provided a computer-implemented method for processing audio based on a signal-to-noise ratio, SNR. The method comprises: receiving an object-separated input signal comprising a plurality of audio objects; determining a respective SNR of one or more audio objects of the plurality of audio objects of the object-separated input signal; determining, in response to determining that one or more of the signal-to-noise ratios are above a predetermined first SNR threshold for the respective object, that one or more of the plurality of audio objects are dominant audio objects and/or determining, in response to determining that one or more of the signal-to-noise ratios are below a predetermined second SNR threshold value for the respective object, that one or more of the plurality of audio objects are background audio objects; generating a leakage-reduced output signal by reducing leakage from the input signal. Reducing the leakage from the input signal comprises reducing one or more non-dominant audio object and/or reducing the one or more background objects in the input signal.

The object-separated input signal may be obtained by means of a sparse audio object separation model, such as the sparse object separation model according to the second and/or third aspect, and/or by means of a multi-object separation model, such as the multi-object separation model according to the first aspect.

The first and/or second SNR threshold values for each object may be determined based on the type of object and/or based on a characteristic of the object. The first and/or second SNR threshold values for each object may be different threshold values.

According to a fifth aspect of the present disclosure, there is provided a computer-implemented method for processing audio based on a scene environment classification. The method comprises: receiving an object-separated input signal comprising a plurality of audio objects; determining a scene environment by obtaining a classification of a scene environment, in which the audio objects were recorded, the classification of a scene environment comprising classifying the scene environment into a respective scene environment from a plurality of scene environments based on audio and/or video information; outputting a leakage-reduced output signal by reducing leakage from the input signal based on the determined scene environment.

Reducing leakage may comprise mixing the audio objects based on the determined scene environment. As an example, mixing the audio objects may comprise adjusting a weight of one or more of the plurality of audio objects. The weight may be determined based on the determined scene environment.

Obtaining the classification of the scene environment may comprise classifying the scene environment by a scene environment classifier. The scene environment classifier may be trained to determine a scene environment based on an audio signal and/or a visual signal, such as a video signal. The input signal may be an output signal of the method according to any one of the first, second, or third aspects.

According to a sixth aspect of the present disclosure, there is provided a non-transitory computer-readable medium storing instructions that, upon execution by a processing unit, cause the one or more processing units to perform the method according to any one of the first through fifth aspects.

According to a seventh aspect of the present disclosure, there is provided a system comprising: a processing unit; a non-transitory computer-readable medium storing instructions that, upon execution by the processing unit, cause the processing unit to perform the method according to any one of the first through fifth aspects.

It will be appreciated that any advantage described with respect to one aspect may equally apply to any one of the other aspects of this disclosure.

### Brief description of the drawings

Embodiments of the present disclosure will be described in more detail with reference to the appended drawings, wherein
FIG. 1 shows a schematic flow chart of an example of a method for separating audio objects in a mixed audio signal according to the present disclosure,
FIG. 2A shows a schematic block diagram of an example of a multi-object separation model during a training stage of the multi-object separation model,
FIG. 2B shows a schematic block diagram of an example of a multi-object separation model,
FIG. 3 shows a schematic block diagram of another example of a multi-object separation model during a training stage of the multi-object separation model,
FIG. 4 shows a schematic flow chart of an example of a method for training a sparse audio object separation model,
FIG. 5 shows a schematic flow chart of an example of a method for separating a sparse audio object from a mixed audio signal,
FIG. 6 shows an exemplary spectrogram illustrating examples of sparse and non-sparse audio objects,
FIG. 7 shows a schematic flow chart of an example of a method for processing audio based on a signal-to-noise ratio, SNR,
FIG. 8 shows a schematic flow chart of an example of a computer-implemented method for processing audio based on a scene environment classification, and
FIG. 9 shows a schematic block diagram of a system configured to perform a method according to the present disclosure.

### Detailed description

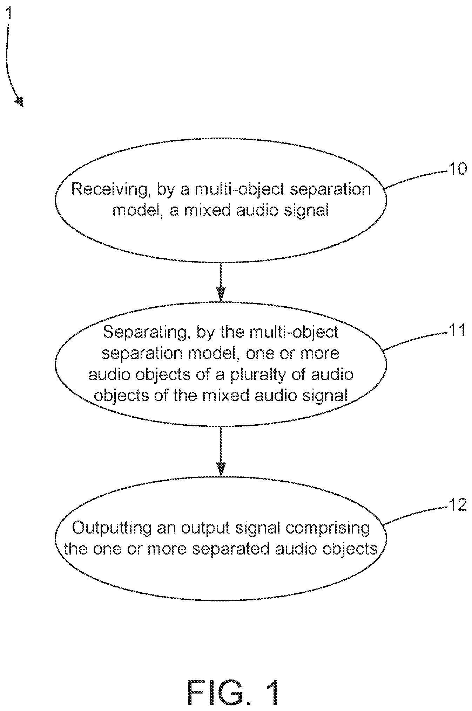

FIG. 1 shows a schematic block diagram of an example of a method 1 for separating audio objects in a mixed audio signal according to the present disclosure. The mixed audio signal comprising a plurality of audio objects. The method comprises: receiving 10, by a multi-object separation model, the mixed audio signal; separating 11, by the multi-object separation model, one or more audio objects of the plurality of audio objects of the mixed audio signal; outputting 12 an output signal comprising the one or more separated audio objects. In the method of FIG. 1, the model comprises a plurality of sub-models, each sub-model of the plurality of sub-models being trained to determine and output a respective one object of the plurality of audio objects.

By each of the sub-models being trained to determine and output a respective one object of the plurality of objects, an increased performance and robustness of the audio object separation may be provided. For instance, an improved separation of audio objects may be provided.

Throughout this description, it will be appreciated that a separated object and an object-separated signal refer to an estimated object and signals comprising the estimated object separated by means of the sub-models and/or elements thereof. Correspondingly, such separated objects and object-separated signals do not necessarily imply perfect separation of objects, as such may not always be possible or feasible by the sub-models and/or elements thereof.

The terms "object" and "audio object" may be used interchangeably throughout this description, both terms referring to an audio object.

As used herein, the term "audio object" may refer to a stream of audio data and associated metadata that may be created or "authored" without reference to any particular playback environment. The metadata may indicate the 3D position of the object, rendering constraints as well as content type (e.g. dialog, effects, etc.). Depending on the implementation, the metadata may alternatively or additionally include other types of data, such as width data, gain data, trajectory data, object position data, audio object gain data, audio object size data, etc. Some audio objects may be static (that is, stationary), whereas others may be dynamic (that is, moving). Audio object details may be authored or rendered according to the associated metadata which, among other things, may indicate the position of the audio object in a three-dimensional space at a given point in time. When audio objects are monitored or played back in a reproduction environment, the audio objects may be rendered according to the positional metadata using the reproduction speakers that are present in the reproduction environment, rather than being output to a predetermined physical channel, as is the case with traditional channel-based systems such as Dolby 5.1 and Dolby 7.1. The rendering process may involve computing a set of audio object gain values for each channel of a set of output channels. Each output channel may correspond to one or more reproduction speakers of the reproduction environment. In this way, content placed on the screen might pan in effectively the same way as with channel-based content, but content placed in the surrounds can be rendered to an individual speaker if desired.

In some examples, each audio object contain audio data from a specific audio source or combination of audio sources, i.e. audio data of a recording of the specific audio source or combination of audio sources. Examples of such audio sources are speech, wind, animal sounds, instruments, rain, or the like. For instance, an audio object may comprise audio data from a person speaking, i.e. speech; a such audio object may be denoted a speech audio object in the present disclosure. Each audio object may be stored as a respective audio file.

In the present disclosure, it will be appreciated that the term model throughout this disclosure may equally refer to a data architecture, which is trained to perform the functionality of the model. As an example, the multi-object separation model may be implemented by a data architecture, such as a deep-learning model or machine-learning data architecture, trained to separate objects from a mixed audio signal comprising multiple objects.

A sub-model may be a machine-learning data architecture or neural network architecture and may comprise any number of layers or nodes. A sub-model may, throughout this disclosure, refer to a part or portion of a multi-object separation model. The part or portion may be less than the entire model, i.e. a multi-object separation model may comprise or consist of a plurality of sub-models.

In some embodiments, outputting 12 the output signal may comprise outputting a plurality of output signals, each comprising or consisting of a respective separated audio object.

Throughout this disclosure it will be appreciated that the models are generally trained to determine and output a respective type or classification of audio object. For instance, a such type or classification of an audio object may be speech, wind noise, rain noise, dog bark, bird chirp, or the like. Correspondingly, each of the sub-models may be trained to determine or separate and output a respective one type of object from a mixed signal comprising a plurality of audio objects, potentially a plurality of audio objects of different types.

The method 1 may be a computer-implemented method.

Each of the sub-models may be trained by using a respective dataset of a plurality of datasets. Each of the plurality of datasets comprising a respective set of data pairs. Each data pair may comprise a signal with the respective one object and a mixed signal comprising the respective one object and at least one further signal. The set of data pairs may comprise a plurality of data pairs.

The respective one object of each data pair may be a respective one object of a same object type or class, i.e. the object type or class which the sub-model is trained to determine or separate and output from a mixed signal comprising a plurality of audio objects, potentially a plurality of audio objects of different types.

Each of the data pairs may comprise two or more audio files or signals in a common object-based audio file format, such as in a Dolby Atmos format. An audio file of the two or more audio files may have only audio therein corresponding to the respective one object or the respective one object type or class, which the respective sub-model is to be trained to separate. A such one object or object type may be called a desired object or desired object type, respectively, for the respective sub-model. Another audio file or signals of the two or more audio files may have audio therein corresponding to the respective one object as well as other objects, noise, or the like. The other objects, noise, or the like may be the objects of the audio file, from which the sub-model is to be trained to separate the respective desired object. The dataset may comprise a plurality of data pairs.

In one example, each sub-model is trained with dataset comprising at least fifty data pairs or at least one hundred data pairs, each data pair comprising a signal consisting of the desired one object or an object of the desired one object type and a mixed signal comprising this object and at least one further object. In an example, the objects of each data pair are separated by the sub-models and labelled by an operator and, optionally, checked. The labels provided by the operator may be stored in metadata for each object and/or may be provided to the model for training. In some examples, an operator, such as a listener, provides feedback regarding successfulness of separation of the desired object from the mixed signal to the sub-model to train the sub-model. In other examples, an audio quality metric is additionally or alternatively used in training each sub-model to separate the respective objects.

The terms "sub-model" may be used herein to refer to segments of the object separation model, which are trained or can be trained separately. For instance, each sub-model may be and/or may comprise a respective neural network model, a machine learning data architecture, and/or an artificial intelligence model.

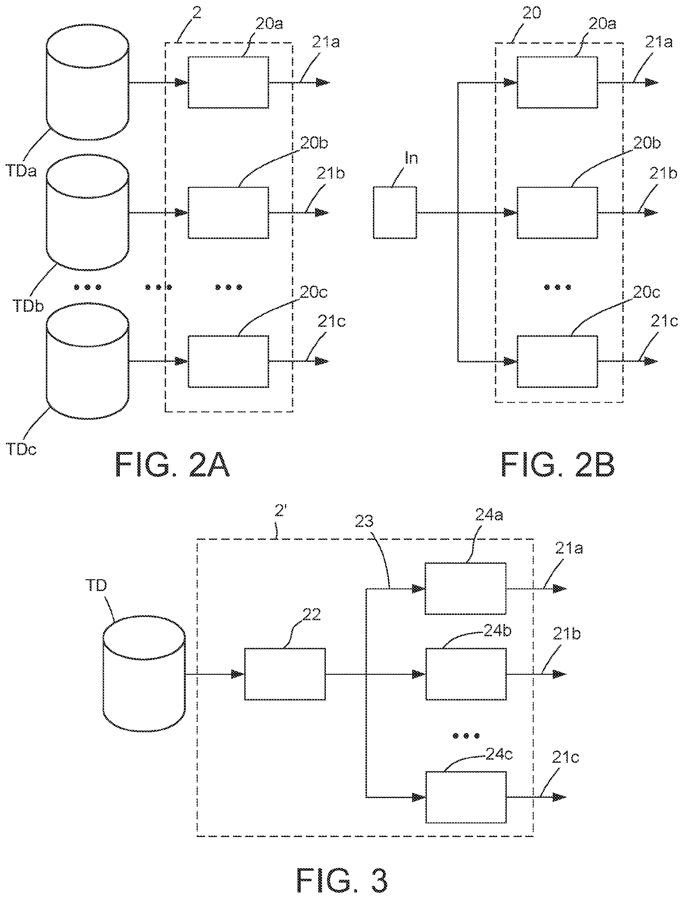

Figure 2A shows a schematic block diagram of an example of a multi-object separation model 2 during a training stage of the multi-object separation model. Figure 2B shows the multi-object separation model 2 during operation, i.e. after the training stage.

The multi-object separation model 2 comprises a plurality of sub-models, comprising a first, second, and third sub-model 20a, 20b, 20c, each being trained to determine and output a respective one object 21a, 21b, 21c. Each of the sub-models 20a, 20b, 20c, may be trained individually using a respective first, second, and third training dataset TDa, TDb, TDc. Each of the training datasets TDa, TDb, TDc may comprise a respective set of data pairs, each data pair potentially comprising a signal with the respective one object or an object of a respective object type, which the sub-model is to be trained to separate, and a mixed signal comprising the respective one object and at least one further signal.

For instance, the first training dataset TDa may comprise a set of data pairs, each comprising a signal with a first audio object, such as only with the first audio object, and an audio signal, also referred to as a mixed audio signal, with the first audio object and at least one further audio object or noise. Thereby, the first sub-model 20a may be trained to separate the first object from the mixed audio signal and output the separated first object 21a. Similarly, the second and third training datasets TDb, TDc may each comprise a set of data pairs. Each of the data pairs of the second training dataset TDb may comprise a signal with a second audio object and a mixed audio signal with the second audio object and at least one further audio object to train the second sub-model 20b to separate the second object from the mixed audio signal and output the separated second object 21b. Correspondingly, each of the data pairs of the second training dataset TDc may comprise a signal with a third audio object and a mixed audio signal with the third audio object and at least one further audio object to train the third sub-model 20c to separate the second object from the mixed audio signal and output the separated second object 21c.

After training, as shown in Figure 2B, an input audio signal In comprising a plurality of objects is, in an example, applied the multi-object separation model 2. The plurality of audio objects may comprise at least one of the first, second, and third audio objects. In this example, each sub-model 20a, 20b, 20c receives the input audio signal In. Each sub-model 20a, 20b, 20c then, in the example illustrated in Figure 2B, separates the first, second, and third audio objects, respectively, and outputs a respective separated first 21a, second 21b, and third audio object.

The multi-object separation model 2 may be a multi-object separation model used in the method 1.

In the example of the multi-object separation model 2 illustrated in Figures 2A and 2B, three sub-models are illustrated. In other examples, however, the multi-object separation model 2 may comprise fewer, such as two, or more, such as 5, 8, 10, or more sub-models, each being trained to separate an audio object from a mixed audio signal. Correspondingly, a respective dataset for training each sub-model may be provided during a training stage.

Alternatively, the plurality of sub-models comprise a feature extractor and a plurality of layers configured to map from a feature extracted signal into a respective one object. Separating the one or more audio objects may comprise: receiving, by the feature extractor, the mixed audio signal; outputting, by the feature extractor, a feature signal comprising one or more features from the mixed audio signal; receiving, by each of the plurality of layers, the feature signal. Separating the one or more audio objects may furthermore comprise outputting, by each of the plurality of layers, a respective object-separated signal comprising a respective separated object.

The feature extractor may be a common feature extractor, such as a feature extractor common for the plurality of sub-models. Correspondingly, the feature extracted signal may be a feature extracted signal common to the plurality of sub-models. Alternatively or additionally, the common feature extractor may be configured to and/or trained to extract features pertaining to the respective objects, into which each of the sub-models are configured to map from the feature extracted signal.

In some examples, the feature extractor is configured to derive features from the input audio signal and/or combine and/or select variables from the input audio signal and combine these into features. Such features may be comprised in the feature-extracted signal and may be determined based on the input audio signal. Alternatively or additionally, the features may relate to, represent and/or be a dimensionality-reduced input signal. The features may be or may comprise a plurality of values and may, optionally, be a feature set and/or a feature vector. The feature extracted signal may have a reduced dimensionality and/or a reduced amount of data compared to the input audio signal. Correspondingly, the feature extracted signal may be considered a summarisation of the input audio signal. The feature-extracted signals may be and/or may comprise features extracted by the feature extractor from the input audio signal. In an example, the feature extractor may be and/or may comprise an autoencoder configured to extract features from the signal or a similar known type of feature extractor.

The feature extracted signal may be the output signal from the feature extractor. The feature extracted signal may comprise a plurality of features from the signal. In some examples, the feature extractor is configured to extract features from the signals indicative of audio objects in the input audio signal.

In some examples, the plurality of sub-models consist of the feature extractor and a plurality of additional layers, each additional layer being configured to map from the feature extracted signal into the respective one audio object. The feature extractor and the additional layers may be trained together or may be trained separately.

Where the plurality of sub-models comprise and/or are implemented as a feature extractor and a plurality of additional layers, a simple implementation may be provided allowing for a reduced complexity and, thus, a reduced processing time, as the feature extractor may be common for all objects to be separated and only one or more additional layers may be necessary to obtain each of the objects. This, again, allows for the object-separation method to be implemented in devices with limited processing power and/or low-power devices. Examples of such devices could be headsets, such as wireless headsets, earbuds, or the like.

In some examples, each of the plurality of sub-models comprises one or more layers configured to map from a feature extracted signal into a respective one object.

In other examples, the multi-object separation model may comprise a feature extractor configured to extract features from an input audio signal and output a feature extracted signal. Each of the sub-models of the multi-object separation model may be one or more layers configured to map from the feature extracted signal into a respective one object. Separating the one or more audio objects may comprise: receiving, by the feature extractor, the mixed audio signal; outputting, by the feature extractor, a feature signal comprising one or more features from the mixed audio signal; receiving, by the one or more layers of each of the plurality of sub-models, the feature signal.

The one or more layers configured to map from a feature extracted signal into a respective one object may be denoted as additional layers. By layer may herein be understood a layer in a machine-leaming, neural network, or artificial intelligence data structure or model in a well-known manner. Thus, a layer may, for instance, refer to a layer of nodes in a neural network data structure or model.

Figure 3 shows a schematic block diagram of a multi-object separation model 2' during a training stage of the multi-object separation model 2'. The multi-object separation model 2' comprises a plurality of sub-models having a common feature extractor 22. The feature extractor 22 is configured to extract features from an input signal, input into the feature extractor 22 and output a feature extracted signal 23, i.e. a signal comprising the features extracted from the input signal by the feature extractor 22.

Each the plurality of sub-models furthermore comprises an additional layer 24a, 24b, 24c for each object to be separated. Each of the first 24a, second 24b, and third additional layers 24c, are trained and/or configured to separate a respective first, second, and third audio object from the feature extracted signal 23. Each separated respective audio object is output from each of the additional layers 24a, 24b, 24c as output signals 21a, 21b, 21c, respectively.

In Figure 3, the multi-object separation model 2' is illustrated in a training stage, in which a training dataset TD provides the input signal to the common feature extractor 22. When in operation, i.e. not in training mode, the training dataset TD may be replaced by an input audio signal, such as input audio signal In, comprising a plurality of objects.

The training dataset TD may comprise a plurality of datasets as described with respect to method 1 for each of the objects to be separated by the multi-object separation model 2'. Alternatively or additionally, the training dataset may comprise the first, second, and third training datasets TDa, TDb, TDc, and/or datasets or data pairs similar thereto.

While the multi-object separation model 2' of Figure 3 is illustrated with three additional layers 24a, 24b, 24c, it will be appreciated that multi-object separation model 2' may comprise any number of additional layers 24a, 24b, 24c and/or sub-models. The multi-object separation model 2' may be used in the method 1.

In some examples, the method further comprises: adding, by the model, metadata indicating a location of model layers in the model, a layer type of model layers, and/or a pointer to back and/or forward layer of the model; obtaining data indicative of a quality of a separation of a respective one object of the plurality of objects is below a predetermined quality threshold; obtaining a subsequent training dataset comprising a respective set of data pairs, each data pair comprising a signal with the respective object and a mixed signal comprising the respective object and at least one further signal; determine, based on the metadata, one or more layers of the model, which are used to separate the respective one object; training, using the subsequent training dataset, the one or more layers of the model, wherein the training comprises freezing remaining layers of the model so that only the determined one or more layers are trained using the subsequent dataset.

By freezing layers may herein be understood that the layers, the layer structures, and/or the coefficients determined for each layer are maintained during, e.g., a training stage. In other words, such frozen layers are not altered and are, for example, neither trained nor re-trained when frozen. On the contrary, layers which are not frozen may be trained and/or re-trained, respectively.

Correspondingly, by using the metadata, a re-training may be performed for certain layers, for which an improved performance is desired or necessary. This may further allow for an improved object audio separation performance of the model as separation of each object may be improved.

The metadata may be associated with an object. Alternatively or additionally, the metadata may indicate layers which are used in separating a specific object. In some examples, a plurality of objects, such as all objects, are each provided with metadata, indicating layers of the model which are used in separating the respective object of the plurality of objects. The metadata may, alternatively or additionally, contain information of the layer location in the model regarding the whole architecture, the layer type, head pointers to back and forward layers, and/or the related objects. The metadata may be output with the object or stored in the multi-object separation model and/or sub-model.

The one or more layers of the model, which are used to separate the respective one object, may comprise or be layers trained and/or used solely for separating the respective object. Alternatively or additionally, the one or more layers of the model, which is/are used to separate the respective one object, may comprise or be layers trained and/or used for separating the respective object as well as one or more further objects.

Where the plurality of sub-models comprises and/or are implemented as a feature extractor and a plurality of additional layers, the frozen layer(s) may be the additional layer(s) for separating the respective object.

Data indicative of a quality may be provided by a listener or user via a user interface. The data indicative of the quality may be provided by the user as a quality rating on a scale, such as a numeric scale, or may be provided as a binary input, e.g., sufficient quality or insufficient quality. The quality of separation may relate to whether other objects are audible in the output signal with the separated object, the signal energy of other objects in the output signal, or the like. Alternatively or additionally, the data indicative of quality may be evaluated for the respective objects based on a quality metric, such as a sound-to-noise ratio, SNR, a correlation between the output signal separated object and a signal consisting of the object, a speech quality metric, or a combination thereof. For example, such data may comprise an indication of the quality, such as a quality value on a scale, or may be a binary value indicating a sufficient quality or an insufficient quality, i.e., whether the quality is below a predetermined quality threshold.

The predetermined quality threshold may be a value or a subjective threshold for a listener or user.

The subsequent training dataset may be different from the training dataset used in training the audio object separation model and/or the training dataset used in training the sub-model previously. For instance, the subsequent training dataset may comprise different data pairs, different signals comprising or consisting of the audio object, and/or different mixed audio signals compared to the training dataset used in training the audio object separation model and/or sub-model. It will be appreciated that a different signal comprising an audio object in this disclosure refers to a different signal comprising a same type of audio object.

The respective one object of each data pair of the subsequent training dataset may be a respective one object of a same object type or class, i.e. the object type or class which the sub-model is trained to determine or separate and output from a mixed signal comprising a plurality of audio objects, potentially a plurality of audio objects of different types.

For example, where the audio object is a speech recording, the dataset used for initial training may comprise a plurality of data pairs, each comprising a signal consisting of recorded speech and a mixed audio signal comprising the recorded speech and at least one further object, such as recorded wind noise, rain noise, dog barking, bird chirping, knocking sounds, or the like. The subsequent training dataset may comprise data pairs, each comprising a signal consisting of a different piece of recorded speech and a mixed audio signal comprising the different piece of recorded speech and at least one further object. The at least one further object may be different from the at least one further object in the dataset used for initial training.

In an example, metadata may be added by a multi-object separation model 2' as illustrated in Figure 3. Where data is obtained indicating that a quality of separation of the output first separated object 21a is below a predetermined threshold, a subsequent training dataset may be obtained comprising data pairs, each comprising a signal comprising or consisting of the first object or objects of the same object type of the first object and a mixed audio signal comprising this object and at least one further object. In an example, only the first additional layer 24a is used in separating the first audio object or audio objects of the first type. In other examples, other or additional layers may be used in this as well. In this example, the second and third additional layers 24b, 24c are frozen and only the first additional layer 24a is retrained based on the subsequent training dataset.

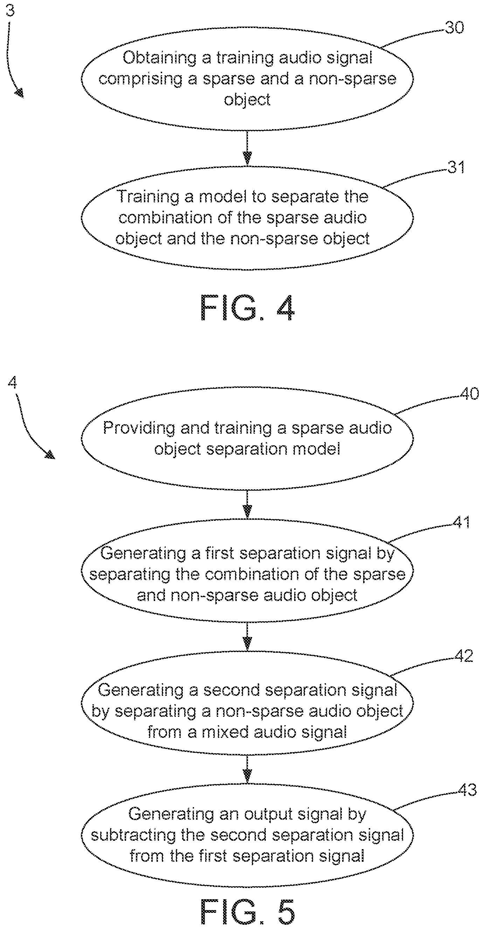

Figure 4 shows a schematic flow chart of an example of a method 3 for training a sparse audio object separation model.

The method 3 is a computer-implemented method for training a sparse audio object separation model. The method 3 comprises: obtaining 30 a training audio signal, the training audio signal comprising a sparse audio object, a non-sparse audio object, and at least one further audio object; and training 31 the model to separate the combination of the sparse audio object and the non-sparse audio object from the training audio signal.

In some examples, multiple training audio signals may be obtained in the step of obtaining 30 the training audio signal. The training audio signal(s) may alternative or additionally be or comprise a training dataset comprising one or more data pairs, each comprising a signal comprising a sparse audio object, a non-sparse audio object, and a mixed signal comprising the sparse audio object, the non-sparse audio object, and at least one further audio object.

Generally, audio objects are categorised as either sparse or non-sparse objects depending on their characteristics, such as temporal duration and/or frequency spectrum of the object. Sparse audio object may generally be defined as narrow in frequency or time span compared to the non-sparse object.

A sparse audio object may be an audio object, which occurs within a relatively short time compared to non-sparse audio objects and/or has substantially all or a majority of its power in a relatively narrow frequency range compared to non-sparse audio objects. For instance, sparse audio objects may be audio objects having a duration shorter than 1 second, such as shorter than 800 ms, shorter than 500 ms, shorter than 400 ms, shorter than 300 ms, shorter than 200 ms, shorter than 100 ms, shorter than 80 ms, or shorter than 50 ms. Sparse audio objects may, alternatively or additionally, have a certain portion of their power, such as more than 50 %, more than 60 %, more than 70 %, more than 80 %, more than 90 %, more than 92 %, more than 94 %, more than 96 %, or more than 98 % in a frequency band narrower than the range of the human hearing, such as within a frequency band of less than 10 kHz, less than 5 kHz, less than 4 kHz, less than 3 kHz, less than 2 kHz, less than 1 kHz, less than 500 Hz, or less than 250 Hz.

Sparse objects may thus occur during a portion, the portion being less than the whole, of the time range of occurrence or duration of non-sparse object(s). Alternatively or additionally, sparse objects may have a shorter duration than non-sparse object. Alternatively or additionally, sparse objects may have a narrower frequency range, i.e. the frequency range in which the sparse objects have frequency components than non-sparse objects and/or may have a frequency range being a portion, the portion being less than the whole, of a frequency range of non-sparse objects.

By training the sparse object separation model to separate the combination of the sparse audio object and the non-sparse audio object from the training audio signal, a model may be trained to allow for an improved separation performance. For instance, the combination may allow for a more robust separation, since the risk of the model attempting to learn an all-zero mask for the object separation is reduced, thereby allowing for an increased performance and robustness of audio object separation performed using a model trained accordingly.

The combination of the sparse audio object and the non-sparse audio object may be one signal, audio file and/or one separated audio object comprising or consisting of the sparse audio object and the non-sparse audio object and/or audio data of the sparse audio object and the non-sparse audio object. Potentially, the model may be trained to separate, from the training signal, one signal, audio file, and/or separated audio object comprising the combination of the sparse audio object and the non-sparse audio object.

The sparse audio object may be one or more of an animal sound, such as a bird chirp or dog bark, thunder, and a knocking sound. Alternatively or additionally, the non-sparse audio object may be one or more of speech, wind noise, and rain.

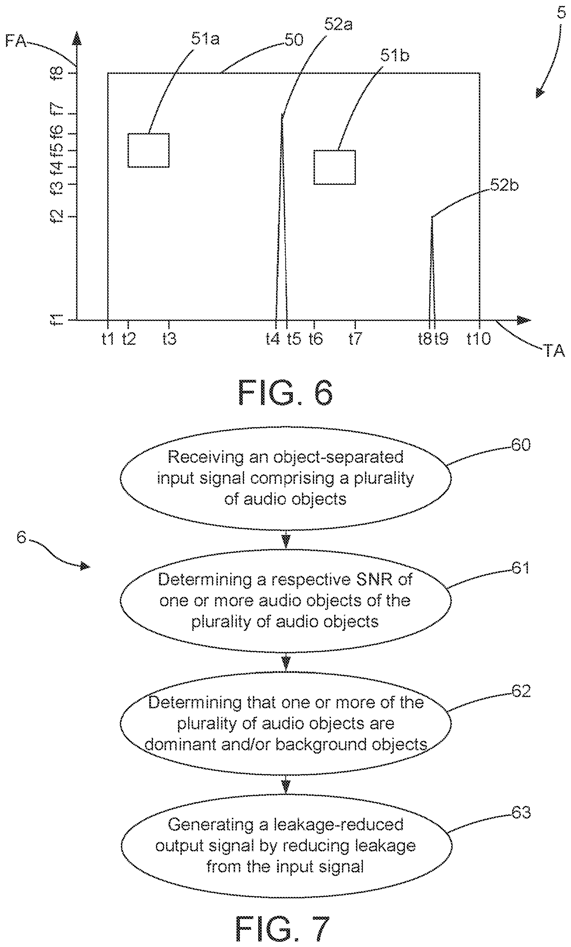

Figure 6 shows an exemplary spectrogram 5 illustrating examples of sparse and non-sparse audio objects.

In the spectrogram 5 in Figure 6, a time axis TA and a frequency axis FA is provided. On the frequency axis FA, a first through eight frequency f1-f8 are indicated. Similarly, on the time axis a first through tenth time point t1-t10 are indicated.

A non-sparse object 50 is illustrated as having a time duration on the time axis from time point t1 to time point t9 and a frequency range of frequency f1 to frequency f8. It will be appreciated that the non-sparse object 50 need not comprise frequency components in every frequency bin from the first frequency f1 to the eight frequency f8 at any time between the first t1 and tenth time points t10; rather the non-sparse object 50 generally comprises signal energy within the time span from the first t1 to the tenth time point t10 and frequency components within the frequency range of the first f1 to eight frequency f8. In an example, the non-sparse object may be speech.

In Figure 6, first set of sparse objects 51a, 51b as well as a second set of sparse objects 52a, 52b are furthermore illustrated. As shown, sparse object 51a occurs from the second time point t2 to the third time point t3 and in a frequency range from the third f3 to the fifth frequency f5. Similarly, sparse object 51b occurs from the sixth time point t6 to the seventh time point t7 and in a frequency range from the third f3 to the fifth frequency f5. The first set of sparse objects 51a, 51b are of the same object type and may be identical objects, such as a same object. In an example, the sparse objects 51a, 51b may both be bird chirps.

The sparse objects 52a, 52b of the second set of sparse objects similarly occurs from the fourth t4 to fifth time points t5 and in the frequency range from the first frequency f1 to the seventh frequency f7 for sparse object 52a and from the eight t8 to ninth time points t9 and in the frequency range from the first frequency f1 to the second frequency f2 for sparse object 52b. The second set of sparse objects 52a, 52b are of the same object type. In this example, the second set of sparse objects 52a, 52b are different from the first set of sparse objects 51a, 51b. In an example, the sparse objects 52a, 52b may both be knocking sounds.

As illustrated in Figure 6, the frequency range of each of the sparse objects 51a, 51b, 52a, 52b is narrower than the frequency range of the non-sparse object 50. Similarly, sparse objects 51a, 51b, 52a, 52b occur within shorter time intervals than the non-sparse objects. In other examples, the frequency range of a sparse object may be identical to the frequency range of the non-sparse object. The time interval of the occurrence may, in this example, be shorter than the time interval for the non-sparse object.

As shown in Figure 6, the non-sparse objects occur during the occurrence of the non-sparse object. Specifically, all of the second t2 to ninth t9 time points lie within the span from the first t1 to the tenth t10 time point. Similarly, the second f2 through seventh frequencies f7 lie within the frequency range from the first f1 through eight frequency f8. Correspondingly, each sparse object 51a, 51b, 52a, 52b of the first and second set of sparse objects occur during a portion, the portion being less than the whole, of the time range of occurrence or duration of non-sparse object 50. Furthermore, the sparse objects may have a shorter duration than non-sparse object. Alternatively or additionally, each of the sparse objects 51a, 51b, 52a, 52b has a narrower frequency range, i.e. the frequency range in which each of the sparse objects 51a, 51b, 52a, 52b have frequency components, than the non-sparse object 50. Each of the sparse objects 51a, 51b, 52a, 52b has a frequency range being a portion, the portion being less than the whole, of a frequency range of non-sparse objects.

Figure 5 shows a schematic flow chart of an example of a method 4 for separating a sparse audio object from a mixed audio signal. The method 4 is a computer-implemented method for separating a sparse audio object from a mixed audio signal. The mixed audio signal comprises at least a sparse audio object, a non-sparse audio object, and at least one further audio object. The method 4 comprises: providing 40 a sparse object separation model and training the sparse audio object separation model according to the second aspect of the present disclosure; generating 41 a first separation signal by separating, by the sparse audio object separation model, the combination of the sparse audio object and the non-sparse audio object from the mixed audio signal; generating 42 a second separation signal by separating, by a non-sparse audio object separation model trained to separate a non-sparse audio object from a mixed audio signal, the non-sparse audio object from the mixed audio signal; generating 43 an output signal by subtracting the second separation signal from the first separation signal.

Thereby, an increased performance and robustness of audio object separation may be provided. By using the model trained according to the second aspect of the present disclosure, such as the method 3, to separate the combination of the sparse and non-sparse audio objects, e.g., to obtain the first separation signal, and subsequently subtracting the non-sparse audio object, e.g., the second separation signal, from the first separation signal, the sparse audio object may be obtained. As mentioned with respect to the method 3, by using the model trained according to the second aspect, a more accurate and robust separation of the sparse audio object may, thus, be obtained, when subtracting the non-sparse audio object from the combination of the sparse and non-sparse audio objects.

In some examples, the non-sparse audio object of the second separation signal is the same non-sparse audio object and/or corresponds to the non-sparse audio object of the first separation signal. Alternatively or additionally, the combination of the sparse audio object and the non-sparse audio object may be one signal, audio file and/or one separated audio object comprising or consisting of the sparse audio object and the non-sparse audio object and/or audio data of the sparse audio object and the non-sparse audio object.

The sparse audio object separation model of the second and/or third aspect may be a multi-object separation model, such as the multi-object separation model according to the first aspect, or part thereof, such as a sub-model thereof. Alternatively or additionally, the non-sparse audio object separation model may be the multi-object separation model according to the first aspect and/or a portion thereof, such as a sub-model thereof.

In some examples, the non-sparse audio object may be separated from the sparse audio object by a traditional non-sparse audio object separation model, as these are generally focused on and adapted to separate non-sparse audio objects from multi-object audio.

By subtracting the second separation signal from the first separation signal may be understood to determine a difference between the second and first separation signals, this difference being the subtracted sparse audio object. Correspondingly, subtracting such two separation signals is not to be understood in a strictly mathematical sense in this disclosure but refers to determining a difference between the two separation signals. In other examples, generating 43 an output signal may be by determining a difference between the second separation signal and the first separation signal, the output signal comprising or consisting of said difference.

In some examples, the method 4 may be introduced in, incorporated in, or otherwise used in conjunction with the method 1.

Figure 7 shows a schematic flow chart of an example of a method 6 for processing audio based on a signal-to-noise ratio, SNR. The method 6 is a computer-implemented method for processing audio based on a signal-to-noise ratio, SNR. The method 6 comprises: receiving 60 an object-separated input signal comprising a plurality of audio objects; determining 61 a respective SNR of one or more audio objects of the plurality of audio objects of the object-separated input signal; determining 62, in response to determining that one or more of the signal-to-noise ratios are above a predetermined first SNR threshold for the respective object, that one or more of the plurality of audio objects are dominant audio objects and/or determining, in response to determining that one or more of the signal-to-noise ratios are below a predetermined second SNR threshold value for the respective object, that one or more of the plurality of audio objects are background audio objects; generating 63 a leakage-reduced output signal by reducing leakage from the input signal. Reducing the leakage from the input signal comprises reducing one or more non-dominant audio object and/or reducing the one or more background objects in the input signal.

Thereby, a dominant object, such as an object which may be considered of interest in the signal, may be extracted more accurately and robustly as leakage from non-dominant or background objects in the audio may be reduced or even removed from the signal.

The method 6 may be a post-processing method.

The first and/or second SNR threshold values for each object may be determined based on the type of object and/or based on a characteristic of the object. The first and/or second SNR threshold values for each object may be different threshold values.

The first and/or SNR thresholds for each object may be preset or may be predetermined for each object type and/or for each object. For instance, the first and/or second SNR threshold may be determined for each object type and upon determination that the object is of the object type, the first and/or second SNR threshold may be set for the specific extracted object. Alternatively or additionally, the object-separated input signal may comprise an indication of an object type for each of the objects and/or metadata indicating an object type for each of the separated objects of the object-separated signal.

In other example, the method comprises determining an object type for each of the objects of the object-separated signal and determining, based on the object type and/or one or more characteristics of the respective object, a first and/or second SNR threshold for each respective object. The characteristics of the object may comprise duration, frequency range, average power, spectral power distribution in frequency bands, a loudness estimate, or a combination thereof.

Reducing leakage may comprise applying a gain value, such as a reduced gain value or a gain value of less than 1, to each of the one or more non-dominant audio object and/or the one or more background objects in the input signal.

The object-separated input signal may be obtained by means of a sparse audio object separation model, such as the sparse object separation model trained according to the method 3 second and/or used in the method 4 and/or by means of a multi-object separation model, such as any of multi-object separation models 2, 2' or the multi-object separation model used in the method 1. Alternatively or additionally, the object-separated input signal may be obtained by means of method 1 or method 4.

In the following an example of the method 6 with an input signal will be described. It will, however, be appreciated that this is merely an example of the method 6 with this specific input signal and that other input signals may be applied. Correspondingly, it will be appreciated that the method 6 is not limited to the following example.

In an example, the method receives 60 object-separated input signal comprises a speech object, a bird chirping object, an animal sound object, a wind object, a rain and thunder object, denoted a rain object in the following for simplification, and another background object. In this and other examples, the rain and thunder object may alternatively be a rain object without thunder. A rain object comprising thunder and/or a rain and thunder object may be considered as one object. In this example, a SNR is determined 61 for each of the objects. In this example, the SNRs are denominated for each of the objects as follows: SNR for the speech object is denoted SNR_s, SNR for the bird chirping object is denoted SNR_b, SNR for the animal sound object is denoted SNR_a, SNR for the wind object is denoted SNR_w, SNR for the rain object is denoted SNR_r, and SNR for the other background object is denoted SNR_n.

In this example, the method determines 62 both first and second thresholds for each object. In this example, the first thresholds for each object are denominated as follows: the first threshold for the speech object is denoted Th_s, the first threshold for the bird chirping object is denoted Th_b, the first threshold for the animal sound object is denoted Th_a, the first threshold for the wind object is denoted Th_w, the first threshold for the rain object is denoted Th_r, and the first threshold for the other background object is denoted Th_n. Similarly, the second thresholds for each object are denominated as follows: the second threshold for the speech object is denoted ε_s, the second threshold for the bird chirping object is denoted ε_b, the second threshold for the animal sound object is denoted ε_a, the second threshold for the wind object is denoted ε_w, the second threshold for the rain object is denoted ε_r, and the second threshold for the other background object is denoted ε_n.

In this example, the leakage-reduced output signal is generated 63, based on the determined SNRs and first and second thresholds, by reducing leakage according to the following exemplary cases. Many cases may be present, for which reason the following exemplary cases may only represent a subset of cases, which the method 6 may apply:
Case 1: For SNR_b > Th_b or SNR_a > Th_a: Bird chirping object or animal sound objects are determined as dominant objects. When generating 63 the output signal, the rain object is determined as background object and then subsequently cleaned from the output signal or reduced or removed in the output signal, so that the rain object is generally not present in the output signal. In some examples, the rain object may be mixed to the other background object and then cleaned, reduced, or removed.

Case 2: For SNR_w > Th_w: Wind object is determined as dominant. In this example, wind noise often has a high signal energy at 0-5kHz, which is likely mask a lot of bird chirping sounds. When generating 63 the output signal, the bird chirping object, animal sound object, and rain object is cleaned from the output signal or reduced or removed in the output signal, so that the bird chirping object, animal sound object, and rain objects are generally not present in the output signal.

Case 3: For SNR_r > Th_r: Rain object is determined as a dominant object. Based on this as dominant object, it is considered unlikely that the bird chirping object, animal sound object, and the other background object is objects of interest and they are, therefore, determined to be background objects and cleaned from the output signal or reduced or removed in the output signal, so that the bird chirping object, animal sound object, and the other background objects are generally not present in the output signal. In some examples, the other background may be mixed to the rain object and subsequently cleaned or reduced or removed from the output signal. If furthermore SNR_w < ε_w (a second threshold value for lowest wind object SNR, for example - 10 dB), wind is furthermore determined to be a background object and cleaned from the output signal or reduced or removed in the output signal, optionally mixed to the rain object and subsequently cleaned, reduced, or removed.

Case 4: For SNR_n > Th_n: it is determined that speech is the only dominant audio object. In this case, e.g., the rain object, may be determined to be a background object and cleaned from the output signal or reduced or removed in the output signal, optionally mixed to the other background object and subsequently cleaned, reduced, or removed. If, furthermore SNR_b < ε_b (a second threshold value for lowest bird chirping object SNR, for example -70 dB), the bird chirping object may be determined to be a background object and cleaned from the output signal or removed in the output signal, optionally mixed to the other background object and subsequently cleaned, reduced, or removed.

Case 5: For SNR_w< ε_w: The wind object is determined to be a background object and cleaned from the output signal or reduced or removed in the output signal, optionally mixed to the other background object and subsequently cleaned, reduced, or removed.

Case 6: For SNR_r < ε_r (a second threshold value for lowest rain object SNR, for example -10 dB): The rain object is determined to be a background object and cleaned from the output signal or reduced or removed in the output signal, optionally mixed to the other background object and subsequently cleaned, reduced, or removed.

Case 7: For SNR_a < ε_a (a second threshold value for an animal object SNR, for example -20 dB): The animal sound object is determined to be a background object and cleaned from the output signal or removed in the output signal, optionally mixed to the other background object and subsequently cleaned, reduced, or removed.

In some examples, the object-separated input audio signal may be provided by means of the method 1, method 4 or any combination of the two. Alternatively or additionally, the object-separated input audio signal may be provided by means of any one or both of object-separation models 2, 2'. In some examples, the method 6 may be applied as a post-processing method to object-separated signals separated by means of the method 1, method 4 or any combination of the two.

Further disclosed is a method comprising the steps of method 1 and, optionally, any further feature disclosed in combination therewith, and, for instance subsequently, the steps of method 6 and, optionally, any further feature disclosed in combination therewith, in which the object-separated input audio signal received in step 60 is the output signal output in step 12. Further disclosed is a method comprising the steps of method 4 and, optionally, any further feature disclosed in combination therewith, and, for instance, subsequently the steps of method 6 and, optionally, any further feature disclosed in combination therewith, in which the object-separated input audio signal received in step 60 is the output signal output in step 43.

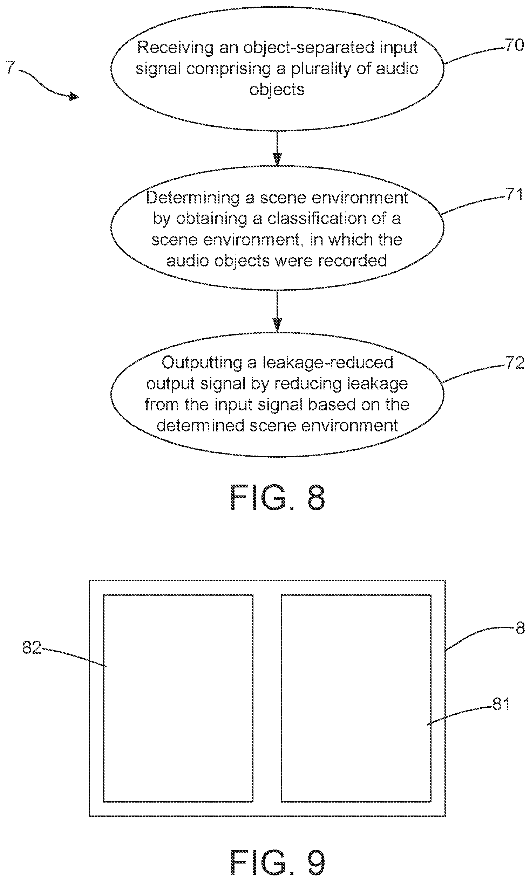

Figure 8 shows a schematic flow chart of an example of a computer-implemented method 7 for processing audio based on a scene environment classification. The method 7 is a computer-implemented method for processing audio based on a scene environment classification. The method 7 comprises: receiving 70 an object-separated input signal comprising a plurality of audio objects; determining 71 a scene environment by obtaining a classification of a scene environment, in which the audio objects were recorded, the classification of a scene environment comprising classifying the scene environment into a respective scene environment from a plurality of scene environments based on audio and/or video information; outputting 72 a leakage-reduced output signal by reducing leakage from the input signal based on the determined scene environment.

Thereby, an improved robustness and an increasingly accurate separation may be achieved as information regarding the scene environment may aid the method in the leakage reduction. For instance, the method may perform different leakage reduction or may reduce different objects depending on the classification of the scene environment.

In some examples, the method 7 may alternatively or additionally to the step of determining 71 comprise determining an object type of one or more of the plurality of audio objects by obtaining a classification of one or more of the plurality of audio objects comprising classifying the one or more of the plurality of audio objects into a respective object type from a plurality of object types based on audio and/or video information. The step of generating the leakage-reduced output signal may comprise reducing leakage from the input signal based on the determined scene environment based on the determined object type (or classification) of the one or more audio objects, the determined scene environment, or a combination thereof, respectively.

Determining 71 the scene environment and/or, where relevant, determining an object type may comprise obtaining visual image of the scene, such as one or more photographs and/or one or more videos of the scene, and/or obtaining audio from the location of the scene. The visual image and/or audio may be obtained from user device, such as a mobile phone. For instance, the object-separated input signal may be an object-separated signal stemming from a video call, a conference call with video, or a call from a mobile phone with an accessible camera. Alternatively, the object-separated signal may stem from a recorded video, e.g.., recorded by a camera or a camera phone. The visual image may be obtained from the data stream of the recorded video, video/conference call, or camera of the mobile phone. The audio may be obtained from the audio stream of a such call or may be obtained, such as derived from the object-separated input signal.

Determining 71 the scene environment may comprise analysing and classifying the scene based on, e.g., the visual image and/or the audio using a machine-learning data architecture trained to classify a scene environment. The machine-learning data architecture may be trained to classify a scene environment of a photograph, a video, and/or audio. The machine-learning data architecture may be a classifying model. The machine-learning data architecture may be trained by means of a dataset comprising images, videos, and/or audio obtained in various scene environments. In one example, a training data set of at least 200 images, videos and/or pieces of audio may be provided and an operator may classify the scene environment for each image, video, and/or audio piece. The machine-learning data architecture may be trained based thereon.

In some examples, the scene environment classes may comprise classifications such as indoor, outdoor, and transportation.

Determining an object type may comprise analysing and classifying the one or more objects based on, e.g., the visual image and/or the audio using a machine-learning data architecture trained to classify a scene environment. The machine-learning data architecture may be trained to classify an object type of an audio object based on one or more of a photograph, a video, and/or audio, such as audio and one or more of videos and photographs. The machine-learning data architecture may be an object classifying model. The machine-learning data architecture may be trained by means of a dataset comprising audio of the each of the plurality of audio object types and one or more of images and videos obtained during the recording of the audio of the audio objects. In one example, a training data set of at least 200 pieces of audio of at least two different object types and corresponding images and/or videos obtained during the recording of the audio of the audio objects. An operator may classify audio object type for each object. The machine-learning data architecture may be trained based thereon.

In some examples, the object type classification may comprise classifications such as bird, dog, cat, ocean, other animals, music, sound of trees, and others.

In some examples, an object type or classification for each of the plurality of objects of the input signal may be provided or obtained by the method 7, such as obtained in a separate step or during the receiving step 70. In some examples, the object type may be provided in the input signal, such as in metadata of the input signal. In these and other examples, the method 7 may comprise object type classification to classify the object into a sub-class or sub-type of the audio object type. For instance, where metadata of the input signal indicates that one object of the plurality of objects is an animal sound, the method 7 may comprise classifying the object to be the sound of a cat or a dog or another animal.

In the following an example of the method 7 with an input signal will be described. It will, however, be appreciated that this is merely an example of the method 7 with this specific input signal and that other input signals may be applied. Correspondingly, it will be appreciated that the method 7 is not limited to the following example. In the present example of method 7, the method furthermore comprises determining an object type of one or more of the plurality of audio objects.

In the example, audio and video is provided in the object-separated input signal comprising a plurality of object-separated audio objects received 70 by the method. The input audio signal comprises a speech object, a bird chirping object, an animal sound object, a wind object, a rain and thunder object, and another background object. The input audio data signal further comprises metadata indicating the object-type for each of these objects.

In this example, the method determines 71, based on the audio and video, a scene classification. The scene classes, into which the scene is classified, comprises indoor, outdoor, and transportation. A scene environment may alternatively or additionally be a surrounding, in which the audio of the plurality of audio objects are recorded.

In this example, the method determines, prior to, simultaneously with, or subsequent to, determining 71 the scene classification an object type of each audio object of the plurality of audio objects. Many cases may be present, for which reason the following exemplary cases may only represent a subset of cases, which the method 7 may apply in generating 72 the leakage-reduced output signal:
Case 1: Scene classified as indoor: wind object and rain object are cleaned from the output signal or reduced or removed in the output signal. Any bird chirping object may not be rendered into a height channel.

Case 2: Scene classified as transportation: any bird chirping object, animal object, wind object, and rain object are cleaned from the output signal or reduced or removed in the output signal. Other background objects may be redefined to be babble and traffic noise.

Case 3: Audio object is classified as ocean object and, optionally, scene environment is classified as outdoor: bird chirping and wind objects are considered objects of interest. These objects may be boosted or suppressed, and/or the remaining objects of the plurality of objects may be cleaned, reduced in or removed from the output signal.

Case 4: Audio object is classified as cat or dog audio object: speech objects and animal objects are considered objects of interest. Rain objects may be cleaned from the output signal or reduced or removed in the output signal. Alternatively or additionally, other objects, such as the remaining objects from the plurality of objects aside from the speech and animal objects, may be suppressed, such as cleaned from the output signal or reduced or removed in the output signal.

Case 5: Audio object is classified as other animals or trees and, optionally, scene environment is classified as outdoor: any wind object is considered object of interest and potential bird chirping objects are similarly considered an object of interest. Any rain object may be suppressed, such as cleaned from the output signal or reduced or removed in the output signal. The remaining objects from the plurality of objects may be suppressed, such as cleaned from the output signal or reduced or removed in the output signal. The other background object may be redefined as babble noise.

Further cases may be provided when generating 72 the leakage-reduced output signal; cases 1-5 are merely mentioned as exemplary cases in the above example of the method 7 with the exemplary object-separated input signal.

The object-separated input signal may be an output signal of the method 6, optionally with any feature disclosed in relation thereto, the method 4, optionally with any feature disclosed in relation thereto, or the method 1, optionally with any feature disclosed in relation thereto.

Method 7 may be a post-processing method.

It will be appreciated that method 7 may be used in combination with method 6, such as for simultaneous processing or for processing prior to or after method 6. In some examples, the methods 6 and 7 may be interrelated and/or may be provided as one method.

Reducing leakage may comprise mixing the audio objects based on the determined scene environment. As an example, mixing the audio objects may comprise adjusting a weight of one or more of the plurality of audio objects. The weight may be determined based on the determined scene environment.

Alternatively or additionally, reducing leakage from the input signal may be performed as described with respect to method 6, such as by applying a gain value having a value of less than 1.

Where object classification is performed, the weight or gain value may be determined based on the determined object type of one or more of the plurality of objects.

Obtaining the classification of the scene environment may comprise classifying the scene environment by a scene environment classifier. The scene environment classifier may be trained to determine a scene environment based on an audio signal and/or a visual signal, such as a video signal.

The input signal may be an output signal of the method according to any one of the first, second, or third aspects.

Figure 9 shows a schematic block diagram of a system 8 configured to perform a method according to the present disclosure. The system 8 comprises: a processing unit 81; a non-transitory computer-readable medium 82 storing instructions that, upon execution by the processing unit 81, cause the processing unit to perform the method according to any one of the first through fifth aspects, such as any one or more of methods 1, 3, 4, 6, or 7.

The processing unit 81 may be any type of processing unit, such as a central processing unit, CPU, a microcontroller unit, MCU, a field-programmable gate array, FPGA, a digital signal processor, DSP, or the like. The non-transitory computer-readable medium 82 may be any type of non-transitory computer-readable medium, such as a computer memory, a Random Access Memory, RAM, a Read-only memory, ROM, a flash memory, or the like.

In some examples, the system 8 may be incorporated in and/or part of a computer device or a portable audio device, such as, but not limited to, a headset, an earbud, an audio processing system of a loudspeaker system, a wireless portable loudspeaker, a mobile phone, a tablet computer, a personal computer, a server, or the like.

### Final remarks

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

As used herein, the term "exemplary" is used in the sense of providing examples, as opposed to indicating quality. That is, an "exemplary embodiment" is an embodiment provided as an example, as opposed to necessarily being an embodiment of exemplary quality.

It should be appreciated that in the above description of exemplary embodiments of the invention, various features are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that more features are required than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be encompassed, and form different embodiments, as would be understood by those skilled in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element.

In the description provided herein, numerous specific details are set forth. However, it is understood that embodiments of the invention may be practiced without these specific details. In other instances, well-known methods, structures and techniques have not been shown in detail in order not to obscure an understanding of this description.

Thus, while there has been described specific embodiments of the invention, those skilled in the art will recognize that other and further modifications may be made, and it is intended to claim all such changes and modifications. For example, any formulas given above are merely representative of procedures that may be used. Functionality may be added or deleted from the block diagrams and operations may be interchanged among functional blocks. Steps may be added or deleted to methods described.

Systems, devices and methods disclosed hereinabove may be implemented as software, firmware, hardware or a combination thereof. For example, aspects of the present application may be embodied, at least in part, in a device, a system that includes more than one device, a method, a computer program product, etc. In a hardware implementation, the division of tasks between functional units referred to in the above description does not necessarily correspond to the division into physical units; to the contrary, one physical component may have multiple functionalities, and one task may be carried out by several physical components in cooperation. Certain components or all components may be implemented as software executed by a digital signal processor or microprocessor or be implemented as hardware or as an application-specific integrated circuit. Such software may be distributed on computer readable media, which may comprise computer storage media (or non-transitory media) and communication media (or transitory media). As is well known to a person skilled in the art, the term computer storage media includes both volatile and non-volatile, removable and non-removable media implemented in any method or technology for storage of information such as computer readable instructions, data structures, program modules or other data. Computer storage media includes, but is not limited to, of the plurality of audio objects.

Each of the sub-models may be trained by using a respective dataset of a plurality of datasets. Each of the plurality of datasets may comprise a respective set of data pairs. Each data pair may comprise a signal with the respective one object and a mixed signal comprising the respective one object and at least one further signal. The plurality of sub-models may comprise a feature extractor. Each of the plurality of sub-models may comprise one or more layers configured to map from a feature extracted signal into a respective one object. Separating the one or more audio objects may comprise receiving, by the feature extractor, the mixed audio signal; outputting, by the feature extractor, a feature signal comprising one or more features from the mixed audio signal; receiving, by the one or more layers of each of the plurality of sub-models, the feature signal. The method may further comprise: adding, by the model, metadata indicating a location of model layers in the model, a layer type of model layers, and/or a pointer to back and/or forward layer of the model; obtaining data indicative of a quality of a separation of a respective one object of the plurality of objects is below a predetermined quality threshold; obtaining a subsequent training dataset comprising a respective set of data pairs, each data pair comprising a signal with the respective object and a mixed signal comprising the respective object and at least one further signal; determine, based on the metadata, one or more layers of the model, which are used to separate the respective one object; training, using the subsequent training dataset, the one or more layers of the model, wherein the training comprises freezing remaining layers of the model so that only the determined one or more layers are trained using the subsequent dataset.

According to a second aspect of the present disclosure, there is provided a computer-implemented method for training a sparse audio object separation model. The method comprises: obtaining a training audio signal, the training audio signal comprising a sparse audio object, a non-sparse audio object, and at least one further audio object; and training the model to separate the combination of the sparse audio object and the non-sparse audio object from the training audio signal.

According to a third aspect of the present disclosure, there is provided a computer-implemented method for separating a sparse audio object from a mixed audio signal. The mixed audio signal comprises at least a sparse audio object, a non-sparse audio object, and at least one further audio object. The method comprises: providing a sparse object separation model and training the sparse audio object separation model according to the second aspect of the present disclosure; generating a first separation signal by separating, by the sparse audio object separation model, the combination of the sparse audio object and the non-sparse audio object from the mixed audio signal; generating a second separation signal by separating, by a non-sparse audio object separation model trained to separate a non-sparse audio object from a mixed audio signal, the non-sparse audio object from the mixed audio signal; generating an output signal by subtracting the second separation signal from the first separation signal.

The sparse audio object separation model of the second and/or third aspect may be a multi-object separation model, such as the multi-object separation model according to the first aspect, or part thereof, such as a sub-model thereof. Alternatively or additionally, the non-sparse audio object separation model may be the multi-object separation model according to the first aspect and/or a portion thereof, such as a sub-model thereof.

The sparse audio object may have a shorter duration than the non-sparse audio object and/or has a narrower frequency range than the non-sparse audio object. The sparse audio object may alternatively or additionally be one or more of an animal sound, such as a bird chirp or dog bark, thunder, and a knocking sound. Alternatively or additionally, The non-sparse audio object may be one or more of speech, wind noise, and rain.

According to a fourth aspect of the present disclosure, there is provided a computer-implemented method for processing audio based on a signal-to-noise ratio, SNR. The method comprises: receiving an object-separated input signal comprising a plurality of audio objects; determining a respective SNR of one or more audio objects of the plurality of audio objects of the object-separated input signal; determining, in response to determining that one or more of the signal-to-noise ratios are above a predetermined first SNR threshold for the respective object, that one or more of the plurality of audio objects are dominant audio objects and/or determining, in response to determining that one or more of the signal-to-noise ratios are below a predetermined second SNR threshold value for the respective object, that one or more of the plurality of audio objects are background audio objects; generating a leakage-reduced output signal by reducing leakage from the input signal. Reducing the leakage from the input signal comprises reducing one or more non-dominant audio object and/or reducing the one or more background objects in the input signal.

The object-separated input signal may be obtained by means of a sparse audio object separation model, such as the sparse object separation model according to the second and/or third aspect, and/or by means of a multi-object separation model, such as the multi-object separation model according to the first aspect.

The first and/or second SNR threshold values for each object may be determined based on the type of object and/or based on a characteristic of the object. The first and/or second SNR threshold values for each object may be different threshold values.

According to a fifth aspect of the present disclosure, there is provided a computer-implemented method for processing audio based on a scene environment classification. The method comprises: receiving an object-separated input signal comprising a plurality of audio objects; determining a scene environment by obtaining a classification of a scene environment, in which the audio objects were recorded, the classification of a scene environment comprising classifying the scene environment into a respective scene environment from a plurality of scene environments based on audio and/or video information; outputting a leakage-reduced output signal by reducing leakage from the input signal based on the determined scene environment.

Reducing leakage may comprise mixing the audio objects based on the determined scene environment. As an example, mixing the audio objects may comprise adjusting a weight of one or more of the plurality of audio objects. The weight may be determined based on the determined scene environment.

Obtaining the classification of the scene environment may comprise classifying the scene environment by a scene environment classifier. The scene environment classifier may be trained to determine a scene environment based on an audio signal and/or a visual signal, such as a video signal. The input signal may be an output signal of the method according to any one of the first, second, or third aspects.

According to a sixth aspect of the present disclosure, there is provided a non-transitory computer-readable medium storing instructions that, upon execution by a processing unit, cause the one or more processing units to perform the method according to any one of the first through fifth aspects.

According to a seventh aspect of the present disclosure, there is provided a system comprising: a processing unit; a non-transitory computer-readable medium storing instructions that, upon execution by the processing unit, cause the processing unit to perform the method according to any one of the first through fifth aspects.

It will be appreciated that any advantage described with respect to one aspect may equally apply to any one of the other aspects of this disclosure.

### Brief description of the drawings

Embodiments of the present disclosure will be described in more detail with reference to the appended drawings, wherein
FIG. 1 shows a schematic flow chart of an example of a method for separating audio objects in a mixed audio signal according to the present disclosure,
FIG. 2A shows a schematic block diagram of an example of a multi-object separation model during a training stage of the multi-object separation model,
FIG. 2B shows a schematic block diagram of an example of a multi-object separation model,
FIG. 3 shows a schematic block diagram of another example of a multi-object separation model during a training stage of the multi-object separation model,
FIG. 4 shows a schematic flow chart of an example of a method for training a sparse audio object separation model,
FIG. 5 shows a schematic flow chart of an example of a method for separating a sparse audio object from a mixed audio signal,
FIG. 6 shows an exemplary spectrogram illustrating examples of sparse and non-sparse audio objects,
FIG. 7 shows a schematic flow chart of an example of a method for processing audio based on a signal-to-noise ratio, SNR,
FIG. 8 shows a schematic flow chart of an example of a computer-implemented method for processing audio based on a scene environment classification, and
FIG. 9 shows a schematic block diagram of a system configured to perform a method according to the present disclosure.

### Detailed description

FIG. 1 shows a schematic block diagram of an example of a method 1 for separating audio objects in a mixed audio signal according to the present disclosure. The mixed audio signal comprising a plurality of audio objects. The method comprises: receiving 10, by a multi-object separation model, the mixed audio signal; separating 11, by the multi-object separation model, one or more audio objects of the plurality of audio objects of the mixed audio signal; outputting 12 an output signal comprising the one or more separated audio objects. In the method of FIG. 1, the model comprises a plurality of sub-models, each sub-model of the plurality of sub-models being trained to determine and output a respective one object of the plurality of audio objects.

By each of the sub-models being trained to determine and output a respective one object of the plurality of objects, an increased performance and robustness of the audio object separation may be provided. For instance, an improved separation of audio objects may be provided.

Throughout this description, it will be appreciated that a separated object and an object-separated signal refer to an estimated object and signals comprising the estimated object separated by means of the sub-models and/or elements thereof. Correspondingly, such separated objects and object-separated signals do not necessarily imply perfect separation of objects, as such may not always be possible or feasible by the sub-models and/or elements thereof.

The terms "object" and "audio object" may be used interchangeably throughout this description, both terms referring to an audio object.

As used herein, the term "audio object" may refer to a stream of audio data and associated metadata that may be created or "authored" without reference to any particular playback environment. The metadata may indicate the 3D position of the object, rendering constraints as well as content type (e.g. dialog, effects, etc.). Depending on the implementation, the metadata may alternatively or additionally include other types of data, such as width data, gain data, trajectory data, object position data, audio object gain data, audio object size data, etc. Some audio objects may be static (that is, stationary), whereas others may be dynamic (that is, moving). Audio object details may be authored or rendered according to the associated metadata which, among other things, may indicate the position of the audio object in a three-dimensional space at a given point in time. When audio objects are monitored or played back in a reproduction environment, the audio objects may be rendered according to the positional metadata using the reproduction speakers that are present in the reproduction environment, rather than being output to a predetermined physical channel, as is the case with traditional channel-based systems such as Dolby 5.1 and Dolby 7.1. The rendering process may involve computing a set of audio object gain values for each channel of a set of output channels. Each output channel may correspond to one or more reproduction speakers of the reproduction environment. In this way, content placed on the screen might pan in effectively the same way as with channel-based content, but content placed in the surrounds can be rendered to an individual speaker if desired.

In some examples, each audio object contain audio data from a specific audio source or combination of audio sources, i.e. audio data of a recording of the specific audio source or combination of audio sources. Examples of such audio sources are speech, wind, animal sounds, instruments, rain, or the like. For instance, an audio object may comprise audio data from a person speaking, i.e. speech; a such audio object may be denoted a speech audio object in the present disclosure. Each audio object may be stored as a respective audio file.

In the present disclosure, it will be appreciated that the term model throughout this disclosure may equally refer to a data architecture, which is trained to perform the functionality of the model. As an example, the multi-object separation model may be implemented by a data architecture, such as a deep-learning model or machine-learning data architecture, trained to separate objects from a mixed audio signal comprising multiple objects.

A sub-model may be a machine-learning data architecture or neural network architecture and may comprise any number of layers or nodes. A sub-model may, throughout this disclosure, refer to a part or portion of a multi-object separation model. The part or portion may be less than the entire model, i.e. a multi-object separation model may comprise or consist of a plurality of sub-models.

In some embodiments, outputting 12 the output signal may comprise outputting a plurality of output signals, each comprising or consisting of a respective separated audio object.

Throughout this disclosure it will be appreciated that the models are generally trained to determine and output a respective type or classification of audio object. For instance, a such type or classification of an audio object may be speech, wind noise, rain noise, dog bark, bird chirp, or the like. Correspondingly, each of the sub-models may be trained to determine or separate and output a respective one type of object from a mixed signal comprising a plurality of audio objects, potentially a plurality of audio objects of different types.

The method 1 may be a computer-implemented method.

Each of the sub-models may be trained by using a respective dataset of a plurality of datasets. Each of the plurality of datasets comprising a respective set of data pairs. Each data pair may comprise a signal with the respective one object and a mixed signal comprising the respective one object and at least one further signal. The set of data pairs may comprise a plurality of data pairs.

The respective one object of each data pair may be a respective one object of a same object type or class, i.e. the object type or class which the sub-model is trained to determine or separate and output from a mixed signal comprising a plurality of audio objects, potentially a plurality of audio objects of different types.

Each of the data pairs may comprise two or more audio files or signals in a common object-based audio file format, such as in a Dolby Atmos format. An audio file of the two or more audio files may have only audio therein corresponding to the respective one object or the respective one object type or class, which the respective sub-model is to be trained to separate. A such one object or object type may be called a desired object or desired object type, respectively, for the respective sub-model. Another audio file or signals of the two or more audio files may have audio therein corresponding to the respective one object as well as other objects, noise, or the like. The other objects, noise, or the like may be the objects of the audio file, from which the sub-model is to be trained to separate the respective desired object. The dataset may comprise a plurality of data pairs.

In one example, each sub-model is trained with dataset comprising at least fifty data pairs or at least one hundred data pairs, each data pair comprising a signal consisting of the desired one object or an object of the desired one object type and a mixed signal comprising this object and at least one further object. In an example, the objects of each data pair are separated by the sub-models and labelled by an operator and, optionally, checked. The labels provided by the operator may be stored in metadata for each object and/or may be provided to the model for training. In some examples, an operator, such as a listener, provides feedback regarding successfulness of separation of the desired object from the mixed signal to the sub-model to train the sub-model. In other examples, an audio quality metric is additionally or alternatively used in training each sub-model to separate the respective objects.

The terms "sub-model" may be used herein to refer to segments of the object separation model, which are trained or can be trained separately. For instance, each sub-model may be and/or may comprise a respective neural network model, a machine learning data architecture, and/or an artificial intelligence model.

Figure 2A shows a schematic block diagram of an example of a multi-object separation model 2 during a training stage of the multi-object separation model. Figure 2B shows the multi-object separation model 2 during operation, i.e. after the training stage.

The multi-object separation model 2 comprises a plurality of sub-models, comprising a first, second, and third sub-model 20a, 20b, 20c, each being trained to determine and output a respective one object 21a, 21b, 21c. Each of the sub-models 20a, 20b, 20c, may be trained individually using a respective first, second, and third training dataset TDa, TDb, TDc. Each of the training datasets TDa, TDb, TDc may comprise a respective set of data pairs, each data pair potentially comprising a signal with the respective one object or an object of a respective object type, which the sub-model is to be trained to separate, and a mixed signal comprising the respective one object and at least one further signal.

For instance, the first training dataset TDa may comprise a set of data pairs, each comprising a signal with a first audio object, such as only with the first audio object, and an audio signal, also referred to as a mixed audio signal, with the first audio object and at least one further audio object or noise. Thereby, the first sub-model 20a may be trained to separate the first object from the mixed audio signal and output the separated first object 21a. Similarly, the second and third training datasets TDb, TDc may each comprise a set of data pairs. Each of the data pairs of the second training dataset TDb may comprise a signal with a second audio object and a mixed audio signal with the second audio object and at least one further audio object to train the second sub-model 20b to separate the second object from the mixed audio signal and output the separated second object 21b. Correspondingly, each of the data pairs of the second training dataset TDc may comprise a signal with a third audio object and a mixed audio signal with the third audio object and at least one further audio object to train the third sub-model 20c to separate the second object from the mixed audio signal and output the separated second object 21c.

After training, as shown in Figure 2B, an input audio signal In comprising a plurality of objects is, in an example, applied the multi-object separation model 2. The plurality of audio objects may comprise at least one of the first, second, and third audio objects. In this example, each sub-model 20a, 20b, 20c receives the input audio signal In. Each sub-model 20a, 20b, 20c then, in the example illustrated in Figure 2B, separates the first, second, and third audio objects, respectively, and outputs a respective separated first 21a, second 21b, and third audio object.

The multi-object separation model 2 may be a multi-object separation model used in the method 1.

In the example of the multi-object separation model 2 illustrated in Figures 2A and 2B, three sub-models are illustrated. In other examples, however, the multi-object separation model 2 may comprise fewer, such as two, or more, such as 5, 8, 10, or more sub-models, each being trained to separate an audio object from a mixed audio signal. Correspondingly, a respective dataset for training each sub-model may be provided during a training stage.

Alternatively, the plurality of sub-models comprise a feature extractor and a plurality of layers configured to map from a feature extracted signal into a respective one object. Separating the one or more audio objects may comprise: receiving, by the feature extractor, the mixed audio signal; outputting, by the feature extractor, a feature signal comprising one or more features from the mixed audio signal; receiving, by each of the plurality of layers, the feature signal. Separating the one or more audio objects may furthermore comprise outputting, by each of the plurality of layers, a respective object-separated signal comprising a respective separated object.

The feature extractor may be a common feature extractor, such as a feature extractor common for the plurality of sub-models. Correspondingly, the feature extracted signal may be a feature extracted signal common to the plurality of sub-models. Alternatively or additionally, the common feature extractor may be configured to and/or trained to extract features pertaining to the respective objects, into which each of the sub-models are configured to map from the feature extracted signal.

In some examples, the feature extractor is configured to derive features from the input audio signal and/or combine and/or select variables from the input audio signal and combine these into features. Such features may be comprised in the feature-extracted signal and may be determined based on the input audio signal. Alternatively or additionally, the features may relate to, represent and/or be a dimensionality-reduced input signal. The features may be or may comprise a plurality of values and may, optionally, be a feature set and/or a feature vector. The feature extracted signal may have a reduced dimensionality and/or a reduced amount of data compared to the input audio signal. Correspondingly, the feature extracted signal may be considered a summarisation of the input audio signal. The feature-extracted signals may be and/or may comprise features extracted by the feature extractor from the input audio signal. In an example, the feature extractor may be and/or may comprise an autoencoder configured to extract features from the signal or a similar known type of feature extractor.

The feature extracted signal may be the output signal from the feature extractor. The feature extracted signal may comprise a plurality of features from the signal. In some examples, the feature extractor is configured to extract features from the signals indicative of audio objects in the input audio signal.

In some examples, the plurality of sub-models consist of the feature extractor and a plurality of additional layers, each additional layer being configured to map from the feature extracted signal into the respective one audio object. The feature extractor and the additional layers may be trained together or may be trained separately.

Where the plurality of sub-models comprise and/or are implemented as a feature extractor and a plurality of additional layers, a simple implementation may be provided allowing for a reduced complexity and, thus, a reduced processing time, as the feature extractor may be common for all objects to be separated and only one or more additional layers may be necessary to obtain each of the objects. This, again, allows for the object-separation method to be implemented in devices with limited processing power and/or low-power devices. Examples of such devices could be headsets, such as wireless headsets, earbuds, or the like.

In some examples, each of the plurality of sub-models comprises one or more layers configured to map from a feature extracted signal into a respective one object.

In other examples, the multi-object separation model may comprise a feature extractor configured to extract features from an input audio signal and output a feature extracted signal. Each of the sub-models of the multi-object separation model may be one or more layers configured to map from the feature extracted signal into a respective one object. Separating the one or more audio objects may comprise: receiving, by the feature extractor, the mixed audio signal; outputting, by the feature extractor, a feature signal comprising one or more features from the mixed audio signal; receiving, by the one or more layers of each of the plurality of sub-models, the feature signal.

The one or more layers configured to map from a feature extracted signal into a respective one object may be denoted as additional layers. By layer may herein be understood a layer in a machine-learning, neural network, or artificial intelligence data structure or model in a well-known manner. Thus, a layer may, for instance, refer to a layer of nodes in a neural network data structure or model.

Figure 3 shows a schematic block diagram of a multi-object separation model 2' during a training stage of the multi-object separation model 2'. The multi-object separation model 2' comprises a plurality of sub-models having a common feature extractor 22. The feature extractor 22 is configured to extract features from an input signal, input into the feature extractor 22 and output a feature extracted signal 23, i.e. a signal comprising the features extracted from the input signal by the feature extractor 22.

Each the plurality of sub-models furthermore comprises an additional layer 24a, 24b, 24c for each object to be separated. Each of the first 24a, second 24b, and third additional layers 24c, are trained and/or configured to separate a respective first, second, and third audio object from the feature extracted signal 23. Each separated respective audio object is output from each of the additional layers 24a, 24b, 24c as output signals 21a, 21b, 21c, respectively.

In Figure 3, the multi-object separation model 2' is illustrated in a training stage, in which a training dataset TD provides the input signal to the common feature extractor 22. When in operation, i.e. not in training mode, the training dataset TD may be replaced by an input audio signal, such as input audio signal In, comprising a plurality of objects.

The training dataset TD may comprise a plurality of datasets as described with respect to method 1 for each of the objects to be separated by the multi-object separation model 2'. Alternatively or additionally, the training dataset may comprise the first, second, and third training datasets TDa, TDb, TDc, and/or datasets or data pairs similar thereto.

While the multi-object separation model 2' of Figure 3 is illustrated with three additional layers 24a, 24b, 24c, it will be appreciated that multi-object separation model 2' may comprise any number of additional layers 24a, 24b, 24c and/or sub-models. The multi-object separation model 2' may be used in the method 1.

In some examples, the method further comprises: adding, by the model, metadata indicating a location of model layers in the model, a layer type of model layers, and/or a pointer to back and/or forward layer of the model; obtaining data indicative of a quality of a separation of a respective one object of the plurality of objects is below a predetermined quality threshold; obtaining a subsequent training dataset comprising a respective set of data pairs, each data pair comprising a signal with the respective object and a mixed signal comprising the respective object and at least one further signal; determine, based on the metadata, one or more layers of the model, which are used to separate the respective one object; training, using the subsequent training dataset, the one or more layers of the model, wherein the training comprises freezing remaining layers of the model so that only the determined one or more layers are trained using the subsequent dataset.

By freezing layers may herein be understood that the layers, the layer structures, and/or the coefficients determined for each layer are maintained during, e.g., a training stage. In other words, such frozen layers are not altered and are, for example, neither trained nor re-trained when frozen. On the contrary, layers which are not frozen may be trained and/or re-trained, respectively.

Correspondingly, by using the metadata, a re-training may be performed for certain layers, for which an improved performance is desired or necessary. This may further allow for an improved object audio separation performance of the model as separation of each object may be improved.

The metadata may be associated with an object. Alternatively or additionally, the metadata may indicate layers which are used in separating a specific object. In some examples, a plurality of objects, such as all objects, are each provided with metadata, indicating layers of the model which are used in separating the respective object of the plurality of objects. The metadata may, alternatively or additionally, contain information of the layer location in the model regarding the whole architecture, the layer type, head pointers to back and forward layers, and/or the related objects. The metadata may be output with the object or stored in the multi-object separation model and/or sub-model.

The one or more layers of the model, which are used to separate the respective one object, may comprise or be layers trained and/or used solely for separating the respective object. Alternatively or additionally, the one or more layers of the model, which is/are used to separate the respective one object, may comprise or be layers trained and/or used for separating the respective object as well as one or more further objects.

Where the plurality of sub-models comprises and/or are implemented as a feature extractor and a plurality of additional layers, the frozen layer(s) may be the additional layer(s) for separating the respective object.

Data indicative of a quality may be provided by a listener or user via a user interface. The data indicative of the quality may be provided by the user as a quality rating on a scale, such as a numeric scale, or may be provided as a binary input, e.g., sufficient quality or insufficient quality. The quality of separation may relate to whether other objects are audible in the output signal with the separated object, the signal energy of other objects in the output signal, or the like. Alternatively or additionally, the data indicative of quality may be evaluated for the respective objects based on a quality metric, such as a sound-to-noise ratio, SNR, a correlation between the output signal separated object and a signal consisting of the object, a speech quality metric, or a combination thereof. For example, such data may comprise an indication of the quality, such as a quality value on a scale, or may be a binary value indicating a sufficient quality or an insufficient quality, i.e., whether the quality is below a predetermined quality threshold.

The predetermined quality threshold may be a value or a subjective threshold for a listener or user.

The subsequent training dataset may be different from the training dataset used in training the audio object separation model and/or the training dataset used in training the sub-model previously. For instance, the subsequent training dataset may comprise different data pairs, different signals comprising or consisting of the audio object, and/or different mixed audio signals compared to the training dataset used in training the audio object separation model and/or sub-model. It will be appreciated that a different signal comprising an audio object in this disclosure refers to a different signal comprising a same type of audio object.

The respective one object of each data pair of the subsequent training dataset may be a respective one object of a same object type or class, i.e. the object type or class which the sub-model is trained to determine or separate and output from a mixed signal comprising a plurality of audio objects, potentially a plurality of audio objects of different types.

For example, where the audio object is a speech recording, the dataset used for initial training may comprise a plurality of data pairs, each comprising a signal consisting of recorded speech and a mixed audio signal comprising the recorded speech and at least one further object, such as recorded wind noise, rain noise, dog barking, bird chirping, knocking sounds, or the like. The subsequent training dataset may comprise data pairs, each comprising a signal consisting of a different piece of recorded speech and a mixed audio signal comprising the different piece of recorded speech and at least one further object. The at least one further object may be different from the at least one further object in the dataset used for initial training.

In an example, metadata may be added by a multi-object separation model 2' as illustrated in Figure 3. Where data is obtained indicating that a quality of separation of the output first separated object 21a is below a predetermined threshold, a subsequent training dataset may be obtained comprising data pairs, each comprising a signal comprising or consisting of the first object or objects of the same object type of the first object and a mixed audio signal comprising this object and at least one further object. In an example, only the first additional layer 24a is used in separating the first audio object or audio objects of the first type. In other examples, other or additional layers may be used in this as well. In this example, the second and third additional layers 24b, 24c are frozen and only the first additional layer 24a is retrained based on the subsequent training dataset.

Figure 4 shows a schematic flow chart of an example of a method 3 for training a sparse audio object separation model.

The method 3 is a computer-implemented method for training a sparse audio object separation model. The method 3 comprises: obtaining 30 a training audio signal, the training audio signal comprising a sparse audio object, a non-sparse audio object, and at least one further audio object; and training 31 the model to separate the combination of the sparse audio object and the non-sparse audio object from the training audio signal.

In some examples, multiple training audio signals may be obtained in the step of obtaining 30 the training audio signal. The training audio signal(s) may alternative or additionally be or comprise a training dataset comprising one or more data pairs, each comprising a signal comprising a sparse audio object, a non-sparse audio object, and a mixed signal comprising the sparse audio object, the non-sparse audio object, and at least one further audio object.

Generally, audio objects are categorised as either sparse or non-sparse objects depending on their characteristics, such as temporal duration and/or frequency spectrum of the object. Sparse audio object may generally be defined as narrow in frequency or time span compared to the non-sparse object.

A sparse audio object may be an audio object, which occurs within a relatively short time compared to non-sparse audio objects and/or has substantially all or a majority of its power in a relatively narrow frequency range compared to non-sparse audio objects. For instance, sparse audio objects may be audio objects having a duration shorter than 1 second, such as shorter than 800 ms, shorter than 500 ms, shorter than 400 ms, shorter than 300 ms, shorter than 200 ms, shorter than 100 ms, shorter than 80 ms, or shorter than 50 ms. Sparse audio objects may, alternatively or additionally, have a certain portion of their power, such as more than 50 %, more than 60 %, more than 70 %, more than 80 %, more than 90 %, more than 92 %, more than 94 %, more than 96 %, or more than 98 % in a frequency band narrower than the range of the human hearing, such as within a frequency band of less than 10 kHz, less than 5 kHz, less than 4 kHz, less than 3 kHz, less than 2 kHz, less than 1 kHz, less than 500 Hz, or less than 250 Hz.

Sparse objects may thus occur during a portion, the portion being less than the whole, of the time range of occurrence or duration of non-sparse object(s). Alternatively or additionally, sparse objects may have a shorter duration than non-sparse object. Alternatively or additionally, sparse objects may have a narrower frequency range, i.e. the frequency range in which the sparse objects have frequency components than non-sparse objects and/or may have a frequency range being a portion, the portion being less than the whole, of a frequency range of non-sparse objects.

By training the sparse object separation model to separate the combination of the sparse audio object and the non-sparse audio object from the training audio signal, a model may be trained to allow for an improved separation performance. For instance, the combination may allow for a more robust separation, since the risk of the model attempting to learn an all-zero mask for the object separation is reduced, thereby allowing for an increased performance and robustness of audio object separation performed using a model trained accordingly.

The combination of the sparse audio object and the non-sparse audio object may be one signal, audio file and/or one separated audio object comprising or consisting of the sparse audio object and the non-sparse audio object and/or audio data of the sparse audio object and the non-sparse audio object. Potentially, the model may be trained to separate, from the training signal, one signal, audio file, and/or separated audio object comprising the combination of the sparse audio object and the non-sparse audio object.

The sparse audio object may be one or more of an animal sound, such as a bird chirp or dog bark, thunder, and a knocking sound. Alternatively or additionally, the non-sparse audio object may be one or more of speech, wind noise, and rain.

Figure 6 shows an exemplary spectrogram 5 illustrating examples of sparse and non-sparse audio objects.

In the spectrogram 5 in Figure 6, a time axis TA and a frequency axis FA is provided. On the frequency axis FA, a first through eight frequency f1-f8 are indicated. Similarly, on the time axis a first through tenth time point t1-t10 are indicated.

A non-sparse object 50 is illustrated as having a time duration on the time axis from time point t1 to time point t9 and a frequency range of frequency f1 to frequency f8. It will be appreciated that the non-sparse object 50 need not comprise frequency components in every frequency bin from the first frequency f1 to the eight frequency f8 at any time between the first t1 and tenth time points t10; rather the non-sparse object 50 generally comprises signal energy within the time span from the first t1 to the tenth time point t10 and frequency components within the frequency range of the first f1 to eight frequency f8. In an example, the non-sparse object may be speech.

In Figure 6, first set of sparse objects 51a, 51b as well as a second set of sparse objects 52a, 52b are furthermore illustrated. As shown, sparse object 51a occurs from the second time point t2 to the third time point t3 and in a frequency range from the third f3 to the fifth frequency f5. Similarly, sparse object 51b occurs from the sixth time point t6 to the seventh time point t7 and in a frequency range from the third f3 to the fifth frequency f5. The first set of sparse objects 51a, 51b are of the same object type and may be identical objects, such as a same object. In an example, the sparse objects 51a, 51b may both be bird chirps.

The sparse objects 52a, 52b of the second set of sparse objects similarly occurs from the fourth t4 to fifth time points t5 and in the frequency range from the first frequency f1 to the seventh frequency f7 for sparse object 52a and from the eight t8 to ninth time points t9 and in the frequency range from the first frequency f1 to the second frequency f2 for sparse object 52b. The second set of sparse objects 52a, 52b are of the same object type. In this example, the second set of sparse objects 52a, 52b are different from the first set of sparse objects 51a, 51b. In an example, the sparse objects 52a, 52b may both be knocking sounds.

As illustrated in Figure 6, the frequency range of each of the sparse objects 51a, 51b, 52a, 52b is narrower than the frequency range of the non-sparse object 50. Similarly, sparse objects 51a, 51b, 52a, 52b occur within shorter time intervals than the non-sparse objects. In other examples, the frequency range of a sparse object may be identical to the frequency range of the non-sparse object. The time interval of the occurrence may, in this example, be shorter than the time interval for the non-sparse object.

As shown in Figure 6, the non-sparse objects occur during the occurrence of the non-sparse object. Specifically, all of the second t2 to ninth t9 time points lie within the span from the first t1 to the tenth t10 time point. Similarly, the second f2 through seventh frequencies f7 lie within the frequency range from the first f1 through eight frequency f8. Correspondingly, each sparse object 51a, 51b, 52a, 52b of the first and second set of sparse objects occur during a portion, the portion being less than the whole, of the time range of occurrence or duration of non-sparse object 50. Furthermore, the sparse objects may have a shorter duration than non-sparse object. Alternatively or additionally, each of the sparse objects 51a, 51b, 52a, 52b has a narrower frequency range, i.e. the frequency range in which each of the sparse objects 51a, 51b, 52a, 52b have frequency components, than the non-sparse object 50. Each of the sparse objects 51a, 51b, 52a, 52b has a frequency range being a portion, the portion being less than the whole, of a frequency range of non-sparse objects.

Figure 5 shows a schematic flow chart of an example of a method 4 for separating a sparse audio object from a mixed audio signal. The method 4 is a computer-implemented method for separating a sparse audio object from a mixed audio signal. The mixed audio signal comprises at least a sparse audio object, a non-sparse audio object, and at least one further audio object. The method 4 comprises: providing 40 a sparse object separation model and training the sparse audio object separation model according to the second aspect of the present disclosure; generating 41 a first separation signal by separating, by the sparse audio object separation model, the combination of the sparse audio object and the non-sparse audio object from the mixed audio signal; generating 42 a second separation signal by separating, by a non-sparse audio object separation model trained to separate a non-sparse audio object from a mixed audio signal, the non-sparse audio object from the mixed audio signal; generating 43 an output signal by subtracting the second separation signal from the first separation signal.

Thereby, an increased performance and robustness of audio object separation may be provided. By using the model trained according to the second aspect of the present disclosure, such as the method 3, to separate the combination of the sparse and non-sparse audio objects, e.g., to obtain the first separation signal, and subsequently subtracting the non-sparse audio object, e.g., the second separation signal, from the first separation signal, the sparse audio object may be obtained. As mentioned with respect to the method 3, by using the model trained according to the second aspect, a more accurate and robust separation of the sparse audio object may, thus, be obtained, when subtracting the non-sparse audio object from the combination of the sparse and non-sparse audio objects.

In some examples, the non-sparse audio object of the second separation signal is the same non-sparse audio object and/or corresponds to the non-sparse audio object of the first separation signal. Alternatively or additionally, the combination of the sparse audio object and the non-sparse audio object may be one signal, audio file and/or one separated audio object comprising or consisting of the sparse audio object and the non-sparse audio object and/or audio data of the sparse audio object and the non-sparse audio object.

The sparse audio object separation model of the second and/or third aspect may be a multi-object separation model, such as the multi-object separation model according to the first aspect, or part thereof, such as a sub-model thereof. Alternatively or additionally, the non-sparse audio object separation model may be the multi-object separation model according to the first aspect and/or a portion thereof, such as a sub-model thereof.

In some examples, the non-sparse audio object may be separated from the sparse audio object by a traditional non-sparse audio object separation model, as these are generally focused on and adapted to separate non-sparse audio objects from multi-object audio.

By subtracting the second separation signal from the first separation signal may be understood to determine a difference between the second and first separation signals, this difference being the subtracted sparse audio object. Correspondingly, subtracting such two separation signals is not to be understood in a strictly mathematical sense in this disclosure but refers to determining a difference between the two separation signals. In other examples, generating 43 an output signal may be by determining a difference between the second separation signal and the first separation signal, the output signal comprising or consisting of said difference.

In some examples, the method 4 may be introduced in, incorporated in, or otherwise used in conjunction with the method 1.

Figure 7 shows a schematic flow chart of an example of a method 6 for processing audio based on a signal-to-noise ratio, SNR. The method 6 is a computer-implemented method for processing audio based on a signal-to-noise ratio, SNR. The method 6 comprises: receiving 60 an object-separated input signal comprising a plurality of audio objects; determining 61 a respective SNR of one or more audio objects of the plurality of audio objects of the object-separated input signal; determining 62, in response to determining that one or more of the signal-to-noise ratios are above a predetermined first SNR threshold for the respective object, that one or more of the plurality of audio objects are dominant audio objects and/or determining, in response to determining that one or more of the signal-to-noise ratios are below a predetermined second SNR threshold value for the respective object, that one or more of the plurality of audio objects are background audio objects; generating 63 a leakage-reduced output signal by reducing leakage from the input signal. Reducing the leakage from the input signal comprises reducing one or more non-dominant audio object and/or reducing the one or more background objects in the input signal.

Thereby, a dominant object, such as an object which may be considered of interest in the signal, may be extracted more accurately and robustly as leakage from non-dominant or background objects in the audio may be reduced or even removed from the signal.

The method 6 may be a post-processing method.

The first and/or second SNR threshold values for each object may be determined based on the type of object and/or based on a characteristic of the object. The first and/or second SNR threshold values for each object may be different threshold values.

The first and/or SNR thresholds for each object may be preset or may be predetermined for each object type and/or for each object. For instance, the first and/or second SNR threshold may be determined for each object type and upon determination that the object is of the object type, the first and/or second SNR threshold may be set for the specific extracted object. Alternatively or additionally, the object-separated input signal may comprise an indication of an object type for each of the objects and/or metadata indicating an object type for each of the separated objects of the object-separated signal.

In other example, the method comprises determining an object type for each of the objects of the object-separated signal and determining, based on the object type and/or one or more characteristics of the respective object, a first and/or second SNR threshold for each respective object. The characteristics of the object may comprise duration, frequency range, average power, spectral power distribution in frequency bands, a loudness estimate, or a combination thereof.

Reducing leakage may comprise applying a gain value, such as a reduced gain value or a gain value of less than 1, to each of the one or more non-dominant audio object and/or the one or more background objects in the input signal.

The object-separated input signal may be obtained by means of a sparse audio object separation model, such as the sparse object separation model trained according to the method 3 second and/or used in the method 4 and/or by means of a multi-object separation model, such as any of multi-object separation models 2, 2' or the multi-object separation model used in the method 1. Alternatively or additionally, the object-separated input signal may be obtained by means of method 1 or method 4.

In the following an example of the method 6 with an input signal will be described. It will, however, be appreciated that this is merely an example of the method 6 with this specific input signal and that other input signals may be applied. Correspondingly, it will be appreciated that the method 6 is not limited to the following example.

In an example, the method receives 60 object-separated input signal comprises a speech object, a bird chirping object, an animal sound object, a wind object, a rain and thunder object, denoted a rain object in the following for simplification, and another background object. In this and other examples, the rain and thunder object may alternatively be a rain object without thunder. A rain object comprising thunder and/or a rain and thunder object may be considered as one object. In this example, a SNR is determined 61 for each of the objects. In this example, the SNRs are denominated for each of the objects as follows: SNR for the speech object is denoted SNR_s, SNR for the bird chirping object is denoted SNR_b, SNR for the animal sound object is denoted SNR_a, SNR for the wind object is denoted SNR_w, SNR for the rain object is denoted SNR_r, and SNR for the other background object is denoted SNR_n.

In this example, the method determines 62 both first and second thresholds for each object. In this example, the first thresholds for each object are denominated as follows: the first threshold for the speech object is denoted Th_s, the first threshold for the bird chirping object is denoted Th_b, the first threshold for the animal sound object is denoted Th_a, the first threshold for the wind object is denoted Th_w, the first threshold for the rain object is denoted Th_r, and the first threshold for the other background object is denoted Th_n. Similarly, the second thresholds for each object are denominated as follows: the second threshold for the speech object is denoted ε_s, the second threshold for the bird chirping object is denoted ε _b, the second threshold for the animal sound object is denoted ε_a, the second threshold for the wind object is denoted ε_w, the second threshold for the rain object is denoted ε r, and the second threshold for the other background object is denoted ε_n.

In this example, the leakage-reduced output signal is generated 63, based on the determined SNRs and first and second thresholds, by reducing leakage according to the following exemplary cases. Many cases may be present, for which reason the following exemplary cases may only represent a subset of cases, which the method 6 may apply:
Case 1: For SNR_a > > Th_b or SNR_a > > Th_a: Bird chirping object or animal sound objects are determined as dominant objects. When generating 63 the output signal, the rain object is determined as background object and then subsequently cleaned from the output signal or reduced or removed in the output signal, so that the rain object is generally not present in the output signal. In some examples, the rain object may be mixed to the other background object and then cleaned, reduced, or removed.

Case 2: For SNR_w > Th_w: Wind object is determined as dominant. In this example, wind noise often has a high signal energy at 0-5kHz, which is likely mask a lot of bird chirping sounds. When generating 63 the output signal, the bird chirping object, animal sound object, and rain object is cleaned from the output signal or reduced or removed in the output signal, so that the bird chirping object, animal sound object, and rain objects are generally not present in the output signal.

Case 3: For SNR_r > Th_r: Rain object is determined as a dominant object. Based on this as dominant object, it is considered unlikely that the bird chirping object, animal sound object, and the other background object is objects of interest and they are, therefore, determined to be background objects and cleaned from the output signal or reduced or removed in the output signal, so that the bird chirping object, animal sound object, and the other background objects are generally not present in the output signal. In some examples, the other background may be mixed to the rain object and subsequently cleaned or reduced or removed from the output signal. If furthermore SNR_w < ε_w (a second threshold value for lowest wind object SNR, for example - 10 dB), wind is furthermore determined to be a background object and cleaned from the output signal or reduced or removed in the output signal, optionally mixed to the rain object and subsequently cleaned, reduced, or removed.

Case 4: For SNR_n > Th_n: it is determined that speech is the only dominant audio object. In this case, e.g., the rain object, may be determined to be a background object and cleaned from the output signal or reduced or removed in the output signal, optionally mixed to the other background object and subsequently cleaned, reduced, or removed. If, furthermore SNR_b < ε_b (a second threshold value for lowest bird chirping object SNR, for example -70 dB), the bird chirping object may be determined to be a background object and cleaned from the output signal or removed in the output signal, optionally mixed to the other background object and subsequently cleaned, reduced, or removed.

Case 5: For SNR_w < ε_w: The wind object is determined to be a background object and cleaned from the output signal or reduced or removed in the output signal, optionally mixed to the other background object and subsequently cleaned, reduced, or removed.

Case 6: For SNR_r < ε_r (a second threshold value for lowest rain object SNR, for example -10 dB): The rain object is determined to be a background object and cleaned from the output signal or reduced or removed in the output signal, optionally mixed to the other background object and subsequently cleaned, reduced, or removed.

Case 7: For SNR_a < ε_a (a second threshold value for an animal object SNR, for example -20 dB): The animal sound object is determined to be a background object and cleaned from the output signal or removed in the output signal, optionally mixed to the other background object and subsequently cleaned, reduced, or removed.

In some examples, the object-separated input audio signal may be provided by means of the method 1, method 4 or any combination of the two. Alternatively or additionally, the object-separated input audio signal may be provided by means of any one or both of object-separation models 2, 2'. In some examples, the method 6 may be applied as a post-processing method to object-separated signals separated by means of the method 1, method 4 or any combination of the two.

Further disclosed is a method comprising the steps of method 1 and, optionally, any further feature disclosed in combination therewith, and, for instance subsequently, the steps of method 6 and, optionally, any further feature disclosed in combination therewith, in which the object-separated input audio signal received in step 60 is the output signal output in step 12. Further disclosed is a method comprising the steps of method 4 and, optionally, any further feature disclosed in combination therewith, and, for instance, subsequently the steps of method 6 and, optionally, any further feature disclosed in combination therewith, in which the object-separated input audio signal received in step 60 is the output signal output in step 43.

Figure 8 shows a schematic flow chart of an example of a computer-implemented method 7 for processing audio based on a scene environment classification. The method 7 is a computer-implemented method for processing audio based on a scene environment classification. The method 7 comprises: receiving 70 an object-separated input signal comprising a plurality of audio objects; determining 71 a scene environment by obtaining a classification of a scene environment, in which the audio objects were recorded, the classification of a scene environment comprising classifying the scene environment into a respective scene environment from a plurality of scene environments based on audio and/or video information; outputting 72 a leakage-reduced output signal by reducing leakage from the input signal based on the determined scene environment.

Thereby, an improved robustness and an increasingly accurate separation may be achieved as information regarding the scene environment may aid the method in the leakage reduction. For instance, the method may perform different leakage reduction or may reduce different objects depending on the classification of the scene environment.

In some examples, the method 7 may alternatively or additionally to the step of determining 71 comprise determining an object type of one or more of the plurality of audio objects by obtaining a classification of one or more of the plurality of audio objects comprising classifying the one or more of the plurality of audio objects into a respective object type from a plurality of object types based on audio and/or video information. The step of generating the leakage-reduced output signal may comprise reducing leakage from the input signal based on the determined scene environment based on the determined object type (or classification) of the one or more audio objects, the determined scene environment, or a combination thereof, respectively.

Determining 71 the scene environment and/or, where relevant, determining an object type may comprise obtaining visual image of the scene, such as one or more photographs and/or one or more videos of the scene, and/or obtaining audio from the location of the scene. The visual image and/or audio may be obtained from user device, such as a mobile phone. For instance, the object-separated input signal may be an obj ect-separated signal stemming from a video call, a conference call with video, or a call from a mobile phone with an accessible camera. Alternatively, the object-separated signal may stem from a recorded video, e.g.., recorded by a camera or a camera phone. The visual image may be obtained from the data stream of the recorded video, video/conference call, or camera of the mobile phone. The audio may be obtained from the audio stream of a such call or may be obtained, such as derived from the object-separated input signal.

Determining 71 the scene environment may comprise analysing and classifying the scene based on, e.g., the visual image and/or the audio using a machine-learning data architecture trained to classify a scene environment. The machine-learning data architecture may be trained to classify a scene environment of a photograph, a video, and/or audio. The machine-learning data architecture may be a classifying model. The machine-learning data architecture may be trained by means of a dataset comprising images, videos, and/or audio obtained in various scene environments. In one example, a training data set of at least 200 images, videos and/or pieces of audio may be provided and an operator may classify the scene environment for each image, video, and/or audio piece. The machine-learning data architecture may be trained based thereon.

In some examples, the scene environment classes may comprise classifications such as indoor, outdoor, and transportation.

Determining an object type may comprise analysing and classifying the one or more objects based on, e.g., the visual image and/or the audio using a machine-learning data architecture trained to classify a scene environment. The machine-learning data architecture may be trained to classify an object type of an audio object based on one or more of a photograph, a video, and/or audio, such as audio and one or more of videos and photographs. The machine-learning data architecture may be an object classifying model. The machine-learning data architecture may be trained by means of a dataset comprising audio of the each of the plurality of audio object types and one or more of images and videos obtained during the recording of the audio of the audio objects. In one example, a training data set of at least 200 pieces of audio of at least two different object types and corresponding images and/or videos obtained during the recording of the audio of the audio objects. An operator may classify audio object type for each object. The machine-learning data architecture may be trained based thereon.

In some examples, the object type classification may comprise classifications such as bird, dog, cat, ocean, other animals, music, sound of trees, and others.

In some examples, an object type or classification for each of the plurality of objects of the input signal may be provided or obtained by the method 7, such as obtained in a separate step or during the receiving step 70. In some examples, the object type may be provided in the input signal, such as in metadata of the input signal. In these and other examples, the method 7 may comprise object type classification to classify the object into a sub-class or sub-type of the audio object type. For instance, where metadata of the input signal indicates that one object of the plurality of objects is an animal sound, the method 7 may comprise classifying the object to be the sound of a cat or a dog or another animal.

In the following an example of the method 7 with an input signal will be described. It will, however, be appreciated that this is merely an example of the method 7 with this specific input signal and that other input signals may be applied. Correspondingly, it will be appreciated that the method 7 is not limited to the following example. In the present example of method 7, the method furthermore comprises determining an object type of one or more of the plurality of audio objects.

In the example, audio and video is provided in the object-separated input signal comprising a plurality of object-separated audio objects received 70 by the method. The input audio signal comprises a speech object, a bird chirping object, an animal sound object, a wind object, a rain and thunder object, and another background object. The input audio data signal further comprises metadata indicating the object-type for each of these objects.

In this example, the method determines 71, based on the audio and video, a scene classification. The scene classes, into which the scene is classified, comprises indoor, outdoor, and transportation. A scene environment may alternatively or additionally be a surrounding, in which the audio of the plurality of audio objects are recorded.

In this example, the method determines, prior to, simultaneously with, or subsequent to, determining 71 the scene classification an object type of each audio object of the plurality of audio objects. Many cases may be present, for which reason the following exemplary cases may only represent a subset of cases, which the method 7 may apply in generating 72 the leakage-reduced output signal:
Case 1: Scene classified as indoor: wind object and rain object are cleaned from the output signal or reduced or removed in the output signal. Any bird chirping object may not be rendered into a height channel.

Case 2: Scene classified as transportation: any bird chirping object, animal object, wind object, and rain object are cleaned from the output signal or reduced or removed in the output signal. Other background objects may be redefined to be babble and traffic noise.

Case 3: Audio object is classified as ocean object and, optionally, scene environment is classified as outdoor: bird chirping and wind objects are considered objects of interest. These objects may be boosted or suppressed, and/or the remaining objects of the plurality of objects may be cleaned, reduced in or removed from the output signal.

Case 4: Audio object is classified as cat or dog audio object: speech objects and animal objects are considered objects of interest. Rain objects may be cleaned from the output signal or reduced or removed in the output signal. Alternatively or additionally, other objects, such as the remaining objects from the plurality of objects aside from the speech and animal objects, may be suppressed, such as cleaned from the output signal or reduced or removed in the output signal.

Case 5: Audio object is classified as other animals or trees and, optionally, scene environment is classified as outdoor: any wind object is considered object of interest and potential bird chirping objects are similarly considered an object of interest. Any rain object may be suppressed, such as cleaned from the output signal or reduced or removed in the output signal. The remaining objects from the plurality of objects may be suppressed, such as cleaned from the output signal or reduced or removed in the output signal. The other background object may be redefined as babble noise.

Further cases may be provided when generating 72 the leakage-reduced output signal; cases 1-5 are merely mentioned as exemplary cases in the above example of the method 7 with the exemplary object-separated input signal.

The object-separated input signal may be an output signal of the method 6, optionally with any feature disclosed in relation thereto, the method 4, optionally with any feature disclosed in relation thereto, or the method 1, optionally with any feature disclosed in relation thereto.

Method 7 may be a post-processing method.

It will be appreciated that method 7 may be used in combination with method 6, such as for simultaneous processing or for processing prior to or after method 6. In some examples, the methods 6 and 7 may be interrelated and/or may be provided as one method.

Reducing leakage may comprise mixing the audio objects based on the determined scene environment. As an example, mixing the audio objects may comprise adjusting a weight of one or more of the plurality of audio objects. The weight may be determined based on the determined scene environment.

Alternatively or additionally, reducing leakage from the input signal may be performed as described with respect to method 6, such as by applying a gain value having a value of less than 1.

Where object classification is performed, the weight or gain value may be determined based on the determined object type of one or more of the plurality of objects.

Obtaining the classification of the scene environment may comprise classifying the scene environment by a scene environment classifier. The scene environment classifier may be trained to determine a scene environment based on an audio signal and/or a visual signal, such as a video signal.

The input signal may be an output signal of the method according to any one of the first, second, or third aspects.

Figure 9 shows a schematic block diagram of a system 8 configured to perform a method according to the present disclosure. The system 8 comprises: a processing unit 81; a non-transitory computer-readable medium 82 storing instructions that, upon execution by the processing unit 81, cause the processing unit to perform the method according to any one of the first through fifth aspects, such as any one or more of methods 1, 3, 4, 6, or 7.

The processing unit 81 may be any type of processing unit, such as a central processing unit, CPU, a microcontroller unit, MCU, a field-programmable gate array, FPGA, a digital signal processor, DSP, or the like. The non-transitory computer-readable medium 82 may be any type of non-transitory computer-readable medium, such as a computer memory, a Random Access Memory, RAM, a Read-only memory, ROM, a flash memory, or the like.

In some examples, the system 8 may be incorporated in and/or part of a computer device or a portable audio device, such as, but not limited to, a headset, an earbud, an audio processing system of a loudspeaker system, a wireless portable loudspeaker, a mobile phone, a tablet computer, a personal computer, a server, or the like.

### Final remarks

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

As used herein, the term "exemplary" is used in the sense of providing examples, as opposed to indicating quality. That is, an "exemplary embodiment" is an embodiment provided as an example, as opposed to necessarily being an embodiment of exemplary quality.

It should be appreciated that in the above description of exemplary embodiments of the invention, various features are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that more features are required than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element.

In the description provided herein, numerous specific details are set forth. However, it is understood that embodiments of the invention may be practiced without these specific details. In other instances, well-known methods, structures and techniques have not been shown in detail in order not to obscure an understanding of this description.

Systems, devices and methods disclosed hereinabove may be implemented as software, firmware, hardware or a combination thereof. For example, aspects of the present application may be embodied, at least in part, in a device, a system that includes more than one device, a method, a computer program product, etc. In a hardware implementation, the division of tasks between functional units referred to in the above description does not necessarily correspond to the division into physical units; to the contrary, one physical component may have multiple functionalities, and one task may be carried out by several physical components in cooperation. Certain components or all components may be implemented as software executed by a digital signal processor or microprocessor or be implemented as hardware or as an application-specific integrated circuit. Such software may be distributed on computer readable media, which may comprise computer storage media (or non-transitory media) and communication media (or transitory media). As is well known to a person skilled in the art, the term computer storage media includes both volatile and non-volatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information, and which can be accessed by a computer. Further, it is well known to the skilled person that communication media typically embodies computer readable instructions, data structures, program modules or other data in a modulated data signal such as a carrier wave or other transport mechanism and includes any information delivery media.

## Claims

1. A computer-implemented method (6) for processing audio based on a signal-to-noise ratio, SNR, the method comprising:
receiving (60) an object-separated input signal comprising a plurality of audio objects;
determining (61) a respective SNR of one or more audio objects of the plurality of audio objects of the object-separated input signal;
determining (62), in response to determining that one or more of the signal-to-noise ratios are above a predetermined first SNR threshold for the respective audio object, that one or more of the plurality of audio objects are dominant audio objects and/or determining, in response to determining that one or more of the signal-to-noise ratios are below a predetermined second SNR threshold value for the respective audio object, that one or more of the plurality of audio objects are background audio objects;
generating (63) a leakage-reduced output signal by reducing one or more non-dominant audio objects and/or reducing the one or more background audio objects in the input signal.

2. The method according to claim 1, wherein the first and/or second SNR threshold values for each audio object is/are determined based on the type of audio object and/or based on a characteristic of the audio object, and/or wherein
the first and/or second SNR threshold values for each audio object are different threshold values.

3. The method according to any one of claims 1 or 2, wherein generating the leakage-reduced output signal comprises applying a gain value of less than 1, to each of the one or more non-dominant audio objects and/or the one or more background audio objects in the input signal.

4. The method according to any one of claims 1-3, further comprising:
receiving (10), by a multi-object separation model (2), a mixed audio signal comprising a plurality of audio objects;
separating (11), by the multi-object separation model (2), one or more audio objects of the plurality of audio objects of the mixed audio signal;
outputting (12) an output signal comprising the one or more separated audio objects (21) separated from the mixed audio signal,
wherein the model comprises a plurality of sub-models (20), each sub-model of the plurality of sub-models (20) being trained to determine and output a respective one audio object (21) of the plurality of audio objects, and
wherein the input signal is the output signal comprising the one or more separated audio objects separated from the mixed audio signal.

5. The method according to claim 4, wherein each of the sub-models (20) are trained by using a respective dataset of a plurality of datasets (TD), each of the plurality of datasets (TD) comprising a respective set of data pairs, each data pair comprising a signal with the respective one audio object and a mixed signal comprising the respective one audio object and at least one further signal.

6. The method according to claim 4 or 5, wherein the plurality of sub-models (20) comprise a feature extractor (22), and wherein each of the plurality of sub-models (20) comprises one or more layers configured to map from a feature extracted signal into a respective one audio object, and wherein separating the one or more audio objects of the mixed audio signal comprises:
receiving, by the feature extractor (22), the mixed audio signal;
outputting, by the feature extractor (22), a feature signal (23) comprising one or more features from the mixed audio signal;
receiving, by the one or more layers of each of the plurality of sub-models (20), the feature signal (23).

7. The method according to any one of claims 4-6, wherein the method further comprises:
adding, by the model, metadata indicating a location of model layers in the model, a layer type of model layers, and/or a pointer to back and/or forward layer of the model;
obtaining data indicative of a quality of a separation of a respective one audio object of the plurality of audio objects of the mixed audio signal is below a predetermined quality threshold;
obtaining a subsequent training dataset comprising a respective set of data pairs, each data pair comprising a signal with the respective audio object and a mixed signal comprising the respective audio object and at least one further signal;
determine, based on the metadata, one or more layers of the model, which are used to separate the respective one audio object;
training, using the subsequent training dataset, the one or more layers of the model, wherein the training comprises freezing remaining layers of the model so that only the determined one or more layers are trained using the subsequent dataset.

8. A non-transitory computer-readable medium storing instructions that, upon execution by a processing unit, cause the processing unit to perform the method according to any one of claims 1-7.

9. A system comprising:
a processing unit;
a non-transitory computer-readable medium storing instructions that, upon execution by the processing unit, cause the processing unit to perform the method according to any one of claims 1-7.

## Patentansprüche

1. Computerimplementiertes Verfahren (6) zum Verarbeiten von Audio basierend auf einem Signal-Rausch-Verhältnis, SNR, wobei das Verfahren umfasst:
Empfangen (60) eines objektgetrennten Eingangssignals, das eine Vielzahl von Audioobjekten umfasst;
Bestimmen (61) eines jeweiligen SNR von einem oder mehreren Audioobjekten der Vielzahl von Audioobjekten des objektgetrennten Eingangssignals;
Bestimmen (62), als Reaktion auf Bestimmen, dass ein oder mehrere der Signal-Rausch-Verhältnisse über einem vorbestimmten ersten SNR-Schwellenwert für das jeweilige Audioobjekt liegen, dass ein oder mehrere der Vielzahl von Audioobjekten dominante Audioobjekte sind, und/oder Bestimmen, als Reaktion auf Bestimmen, dass ein oder mehrere der Signal-Rausch-Verhältnisse unterhalb eines vorbestimmten zweiten SNR-Schwellenwerts für das jeweilige Audioobjekt liegen, dass ein oder mehrere der Vielzahl von Audioobjekten Hintergrund-Audioobjekte sind;
Erzeugen (63) eines leckagereduzierten Ausgangssignals durch Reduzieren eines oder mehrerer nicht-dominanter Audioobjekte und/oder Reduzieren des einen oder mehrerer Hintergrund-Audioobjekte im Eingangssignal.

2. Verfahren nach Anspruch 1, wobei der erste und/oder zweite SNR-Schwellenwert für jedes Audioobjekt basierend auf dem Typ des Audioobjekts und/oder basierend auf einer Eigenschaft des Audioobjekts bestimmt wird/werden, und/oder wobei
der erste und/oder zweite SNR-Schwellenwert für jedes Audioobjekt unterschiedliche Schwellenwerte sind.

3. Verfahren nach einem der Ansprüche 1 oder 2, wobei Erzeugen des leckagereduzierten Ausgangssignals Anwenden eines Verstärkungswerts von weniger als 1 auf jedes von dem einen oder den mehreren nicht-dominanten Audioobjekten und/oder dem einen oder den mehreren Hintergrund-Audioobjekten im Eingangssignal umfasst.

4. Verfahren nach einem der Ansprüche 1-3, weiter umfassend:
Empfangen (10), durch ein Mehrobjekt-Trennungsmodell (2), eines gemischten Audiosignals, das eine Vielzahl von Audioobjekten umfasst;
Trennen (11), durch das Mehrobjekt-Trennungsmodell (2), eines oder mehrerer Audioobjekte der Vielzahl von Audioobjekten des gemischten Audiosignals;
Ausgeben (12) eines Ausgangssignals, das das eine oder die mehreren getrennten Audioobjekte (21) umfasst, die von dem gemischten Audiosignal getrennt sind,
wobei das Modell eine Vielzahl von Teilmodellen (20) umfasst, wobei jedes Teilmodell der Vielzahl von Teilmodellen (20) trainiert ist, ein jeweiliges Audioobjekt (21) der Vielzahl von Audioobjekten zu bestimmen und auszugeben, und
wobei das Eingangssignal das Ausgangssignal ist, das das eine oder die mehreren getrennten Audioobjekte umfasst, die von dem gemischten Audiosignal getrennt sind.

5. Verfahren nach Anspruch 4, wobei jedes der Teilmodelle (20) unter Verwendung eines jeweiligen Datensatzes einer Vielzahl von Datensätzen (TD) trainiert wird, wobei jeder der Vielzahl von Datensätzen (TD) einen jeweiligen Satz von Datenpaaren umfasst, wobei jedes Datenpaar ein Signal mit dem jeweiligen einen Audioobjekt und ein gemischtes Signal umfasst, das das jeweilige eine Audioobjekt und mindestens ein weiteres Signal umfasst.

6. Verfahren nach Anspruch 4 oder 5, wobei die Vielzahl von Teilmodellen (20) einen Merkmalsextraktor (22) umfasst, und wobei jedes der Vielzahl von Teilmodellen (20) eine oder mehrere Schichten umfasst, die konfiguriert sind, um aus einem extrahierten Merkmalsignal auf ein entsprechendes Audioobjekt abzubilden, und wobei Trennen des einen oder der mehreren Audioobjekte des gemischten Audiosignals umfasst:
Empfangen, durch den Merkmalsextraktor (22), des gemischten Audiosignals;
Ausgeben, durch den Merkmalsextraktor (22), eines Merkmalsignals (23), das ein oder mehrere Merkmale aus dem gemischten Audiosignal umfasst;
Empfangen, durch die eine oder mehreren Schichten jedes der Vielzahl von Teilmodellen (20), des Merkmalsignals (23).

7. Verfahren nach einem der Ansprüche 4-6, wobei das Verfahren weiter umfasst:
Hinzufügen, durch das Modell, von Metadaten, die eine Stelle von Modellschichten in dem Modell, einen Schichttyp von Modellschichten und/oder einen Zeiger auf die rückwärtige und/oder vordere Schicht des Modells angeben;
Erhalten von Daten, die angeben, dass eine Qualität der Trennung eines jeweiligen Audioobjekts der Vielzahl von Audioobjekten des gemischten Audiosignals unterhalb einer vorbestimmten Qualitätsschwelle liegt;
Erhalten eines nachfolgenden Trainingsdatensatzes, der einen jeweiligen Satz von Datenpaaren umfasst, wobei jedes Datenpaar ein Signal mit dem jeweiligen Audioobjekt und ein gemischtes Signal umfasst, das das jeweilige Audioobjekt und mindestens ein weiteres Signal umfasst;
Bestimmen, basierend auf den Metadaten, einer oder mehrerer Schichten des Modells, die verwendet werden, um das jeweilige eine Audioobjekt zu trennen;
Training, unter Verwendung des nachfolgenden Trainingsdatensatzes, der einen oder mehreren Schichten des Modells, wobei das Training Einfrieren verbleibender Schichten des Modells umfasst, sodass nur die bestimmte(n) eine oder mehreren Schichten unter Verwendung des nachfolgenden Datensatzes trainiert werden.

8. Nichtflüchtiges, computerlesbares Medium, das Anweisungen speichert, die bei Ausführung durch eine Verarbeitungseinheit die Verarbeitungseinheit veranlassen, das Verfahren nach einem der Ansprüche 1-7 durchzuführen.

9. System, umfassend:
eine Verarbeitungseinheit;
ein nichtflüchtiges, computerlesbares Medium, das Anweisungen speichert, die bei Ausführung durch die Verarbeitungseinheit die Verarbeitungseinheit veranlassen, das Verfahren nach einem der Ansprüche 1-7 durchzuführen.

## Revendications

1. Procédé mis en œuvre par ordinateur (6) pour traiter un audio sur la base d'un rapport signal/bruit (SNR), le procédé comprenant :
la réception (60) d'un signal d'entrée séparé en objets comprenant une pluralité d'objets audio ;
la détermination (61) d'un SNR respectif d'un ou de plusieurs objets audio de la pluralité d'objets audio du signal d'entrée séparé en objet ;
la détermination (62), à la suite de la détermination qu'un ou plusieurs rapports signal/bruit sont supérieurs à un premier seuil de SNR prédéterminé pour l'objet audio respectif, qu'un ou plusieurs objets audio de la pluralité d'objets audio sont des objets audio dominants et/ou la détermination, à la suite de la détermination qu'un ou plusieurs des rapports signal/bruit sont inférieurs à une seconde valeur seuil de SNR prédéterminée pour l'objet audio respectif, qu'un ou plusieurs objets audio de la pluralité d'objets audio sont des objets audio d'arrière-plan ;
la génération (63) d'un signal de sortie à fuite réduite en réduisant un ou plusieurs objets audio non dominants et/ou la réduction des un ou plusieurs objets audio d'arrière-plan dans le signal d'entrée.

2. Procédé selon la revendication 1, dans lequel les première et/ou seconde valeurs seuils de SNR pour chaque objet audio est/sont déterminées sur la base du type d'objet audio et/ou sur la base d'une caractéristique de l'objet audio, et/ou dans lequel
les première et/ou seconde valeurs seuils de SNR pour chaque objet audio sont des valeurs seuils différentes.

3. Procédé selon l'une quelconque des revendications 1 ou 2, dans lequel la génération du signal de sortie à fuite réduite comprend l'application d'une valeur de gain inférieure à 1 à chacun des un ou plusieurs objets audio non dominants et/ou des un ou plusieurs objets audio d'arrière-plan dans le signal d'entrée.

4. Procédé selon l'une quelconque des revendications 1-3, comprenant en outre :
la réception (10), par un modèle de séparation multi-objets (2), d'un signal audio mixte comprenant une pluralité d'objets audio ;
la séparation (11), par le modèle de séparation multi-objets (2), d'un ou de plusieurs objets audio de la pluralité d'objets audio du signal audio mixte ;
l'émission (12) d'un signal de sortie comprenant les un ou plusieurs objets audio séparés (21) séparés du signal audio mixte,
dans lequel le modèle comprend une pluralité de sous-modèles (20), chaque sous-modèle de la pluralité de sous-modèles (20) étant entraîné à déterminer et à produire un objet audio respectif (21) de la pluralité d'objets audio, et
dans lequel le signal d'entrée est le signal de sortie comprenant les un ou plusieurs objets audio séparés du signal audio mixé.

5. Procédé selon la revendication 4, dans lequel chacun des sous-modèles (20) est entraîné en utilisant un ensemble de données respectif d'une pluralité d'ensembles de données (TD), chaque ensemble de données de la pluralité d'ensembles de données (TD) comprenant un ensemble respectif de paires de données, chaque paire de données comprenant un signal avec l'objet audio respectif et un signal mixte comprenant l'objet audio respectif et au moins un autre signal.

6. Procédé selon la revendication 4 ou 5, dans lequel la pluralité de sous-modèles (20) comprend un extracteur de caractéristiques (22) et dans lequel chaque sous-modèle de la pluralité de sous-modèles (20) comprend une ou plusieurs couches configurées pour mapper un signal extrait de caractéristiques vers un objet audio respectif, et dans lequel la séparation des un ou plusieurs objets audio du signal audio mixte comprend :
la réception, par l'extracteur de caractéristiques (22), du signal audio mixte ;
l'émission, par l'extracteur de caractéristiques (22), d'un signal de caractéristique (23) comprenant une ou plusieurs caractéristiques du signal audio mixte ;
la réception, par les une ou plusieurs couches de chaque sous-modèle de la pluralité de sous-modèles (20), du signal de caractéristique (23).

7. Procédé selon l'une quelconque des revendications 4-6, dans lequel le procédé comprend en outre :
l'ajout, par le modèle, de métadonnées indiquant un emplacement de couches du modèle dans le modèle, un type de couche de couches de modèle et/ou un pointeur vers la couche arrière et/ou avant du modèle ;
l'obtention de données indiquant que la qualité d'une séparation d'un objet audio respectif de la pluralité d'objets audio du signal audio mixte est inférieure à un seuil de qualité prédéterminé ;
l'obtention d'un ensemble de données d'entraînement ultérieur comprenant un ensemble respectif de paires de données, chaque paire de données comprenant un signal avec l'objet audio respectif et un signal mixte comprenant l'objet audio respectif et au moins un autre signal ;
la détermination, sur la base des métadonnées, d'une ou de plusieurs couches du modèle, qui sont utilisées pour séparer l'objet audio respectif ;
l'entraînement, à l'aide de l'ensemble de données d'entraînement suivant, des une ou plusieurs couches du modèle, dans lequel l'entraînement comprend le gel de couches restantes du modèle de telle sorte que seules les une ou plusieurs couches déterminées soient entraînées à l'aide de l'ensemble de données suivant.

8. Support non transitoire lisible par ordinateur stockant des instructions qui, lors de l'exécution par une unité de traitement, amènent l'unité de traitement à réaliser le procédé selon l'une quelconque des revendications 1-7.

9. Système comprenant :
une unité de traitement ;
un support non transitoire lisible par ordinateur stockant des instructions qui, lors de l'exécution par l'unité de traitement, amènent l'unité de traitement à réaliser le procédé selon l'une quelconque des revendications 1-7.
